# EUROPEAN PATENT APPLICATION

(11) **EP 2 048 665 A1**
(43) Date of publication of application: **15.04.2009**
(21) Application number: 07791804.3
(22) Date of filing: 02.08.2007
(51) Int. Cl.: G11B 27/00, H04N 5/91, H04N 5/93

(54) **RECORDING DEVICE AND METHOD, IMAGING DEVICE, REPRODUCTION DEVICE AND METHOD, AND PROGRAM**

(30) Priority: 02.08.2006 JP 2006210978
(71) Applicant: Sony Corporation, Tokyo 108-0075 (JP)
(72) Inventor: DATE, Osamu, Minato-ku Tokyo 108-0075 (JP); ISHIZAKA, Toshihiro, Minato-ku Tokyo 108-0075 (JP)
(74) Representative: Thévenet, Jean-Bruno
(86) International application number: PCT/JP2007/065124
(87) International publication number: WO 2008/016094

(57) **Abstract**

The present invention relates to a recording device and method, imaging apparatus, playing device and method, and program whereby a moving image content having a desired attribute can be played rapidly.

A playlist file generating unit 304 generates a playlist file recording the playlist mark of a moving image content for each moving image content. A property file generating unit 301 generates a property file including a mark entry having the attribute information of a moving image content, and a file entry having the reference information to the playlist file for each playlist mark. A file entry number is recorded in the mark entry, and a mark entry number is recorded in the file entry in accordance with the recording order of the playlist mark recorded in playlist file. The present invention can be applied to digital cameras.

## Description

### Technical Field

The present invention relates to a recoding device and method, imaging apparatus, playing device and method, and program, and particularly relates to a recoding device and method, imaging apparatus, playing device and method, and program whereby one moving image content is recorded as multiple files, or each of moving image contents recorded as multiple files is played.

### Background Art

In the case of recording a content such as a still image or moving image, there has been employed a device recording metadata relating to the content, i.e., attribute information simultaneously at that time.

In the case of a still image recorded with the EXIF (Exchangeable Image File Format) format, information relating to shooting date and image data is recorded in an IFD region existing in APP1 as metadata. In recent years, a great number of applications employing this metadata have been developed.

Patent Document 1 discloses utilizing metadata to perform editing of a content rapidly. Further, Patent Document 2 discloses an application relating to searching of a content employing metadata.

Patent Document 1: Japanese Unexamined Patent Application Publication No. 2004-319077

Patent Document 2: Japanese Unexamined Patent Application Publication No. 2006-18551

### Disclosure of Invention

### Technical Problem

Heretofore, metadata has been recorded in one file along with image data, such as a still image in the EXIF format. That is to say, at the time of employing metadata, processing has been repeatedly performed wherein a file is opened to extract metadata, determination is made regarding whether or not the metadata thereof can be used for desired processing, the file is closed, the next file is opened, similarly determination is made regarding whether or not the extracted next data can be used for the desired processing, and the file is closed. Thus, in the case of many files being recorded in a recording medium, and intending to use metadata regarding the files, a great amount of time is spent for determination regarding whether or not metadata can be used.

Further, in recent years, there is a great amount of metadata, such as shooting date, to be added to different types of files in common, such as a moving image file or still image file, for example. In the case of an application employing such metadata, in general, a recording method of meta data as to a moving image file and a recording method of metadata as to a still image file differ, and consequently, reading of metadata is performed with different systems, further a great amount of time is spent for determination regarding whether or not metadata can be used regarding different types of content such as a moving image or still image.

Moreover, in the case of each moving image content being recorded as multiple files each of which the data to be stored differs, in order to determine metadata as to a desired moving image content, i.e., attribute information, first complex processing is needed such as determining the range of moving image data as to the desired moving image content, and consequently, further time is spent until the attribute information is referenced. Accordingly, complex processing and long time is required in order to play a moving image content having a desired attribute with reference to the attribute information.

The present invention has been made in light of such a situation, and is to enable a moving image content having a desired attribute to be rapidly played in the case of recording each moving image content being recorded as multiple files each of which the data to be stored differs.

### Technical Solution

A recording device according to a first aspect of the present invention including: management file generating means configured to generate a management file in which of a singular or plurality of moving image contents, playing management information indicating a playing range serving as one recording unit is recorded for each of the moving image contents; and content management file generating means configured to generate a content management file including first entry information having the attribution information of the moving image contents for each piece of the playing management information, and second entry information having reference information to the management file; wherein the content management file generating means record a first identifier for identifying the first entry information in the second entry information in accordance with the recording order of the playing management information recorded in the management file, and records a second identifier for identifying the second entry information in the first entry information.

The recording device may further include information file generating means configured to generate an information file recording file information having the name of the management file for each the management file, which enables the content management file generating means to generate third entry information recording the second identifier for identifying the second entry information in accordance with the recording order of the file information recorded in the information file, and record a third identifier for identifying the third entry information in the second entry information as the reference information.

The recording device enables the first entry information and the second entry information to be configured of a singular or plurality of fixed-length slots, enables the first identifier and the second identifier to indicate the slot number of the top slot, of the singular or plurality of fixed-length slots, and enables the slot number to indicate the slot recording order of the content management file.

The recording device may further include representative image file generating means configured to generate a representative image file having image entry information including the representative image information of the moving image contents for each piece of the playing management information, which enables the content management file generating means to generate the content management file having the first entry information having the attribute information which is a fourth identifier for identifying the image entry information.

The recording device may further include metadata file generating means configured to generate a metadata file having metadata entry information including metadata accompanied with the moving image contents for each piece of the playing management information, which enables the content management file generating means to generate the content management file having the first entry information having the attribute information which is a fifth identifier for identifying the metadata entry information.

The recording device enables the metadata entry information to be configured of a singular or plurality of fixed-length slots, enables the fifth identifier to indicate the slot number of the top slot, of the singular or plurality of fixed-length slots, and enables the slot number to indicate the slot recording order of the metadata file.

A recording method according to the first aspect of the present invention includes the steps of: generating a management file in which of a singular or plurality of moving image contents, playing management information indicating a playing range serving as one recording unit is recorded for each of the moving image contents; and generating a content management file including first entry information having the attribution information of the moving image contents for each piece of the playing management information, and second entry information having reference information to the management file; with a first identifier for identifying the first entry information being recorded in the second entry information in accordance with the recording order of the playing management information recorded in the management file; and with a second identifier for identifying the second entry information being recorded in the first entry information.

A program according to the first aspect of the present invention includes the steps of: generating a management file in which of a singular or plurality of moving image contents, playing management information indicating a playing range serving as one recording unit is recorded for each of the moving image contents; and generating a content management file including first entry information having the attribution information of the moving image contents for each piece of the playing management information, and second entry information having reference information to the management file, which causes a computer to execute processing wherein a first identifier for identifying said first entry information is recorded in said second entry information in accordance with the recording order of said playing management information recorded in said management file, and a second identifier for identifying said second entry information is recorded in said first entry information.

An imaging apparatus according to a second aspect of the present invention is an imaging apparatus configured to generate playing management information along with an image-captured moving image content, including: management file generating means configured to generate a management file in which of a singular or plurality of moving image contents, playing management information indicating a playing range serving as one recording unit is recorded for each of the moving image contents; and content management file generating means configured to generate a content management file including first entry information having the attribution information of the moving image contents for each piece of the playing management information, and second entry information having reference information to the management file; with the content management file generating means recording a first identifier for identifying the first entry information in the second entry information in accordance with the recording order of the playing management information recorded in the management file, and recording a second identifier for identifying the second entry information in the first entry information.

A playing device according to a third aspect of the present invention, with a content management file including first entry information having, of a singular or plurality of moving image contents, the attribute information of the moving image contents for each piece of playing management information indicating a playing range serving as one recording unit, which is identified with a first identifier, recording a second identifier for identifying second entry information having the reference information to a management file recording the playing management information for each of the moving image contents, and second entry information recording the first identifier for identifying the first entry information in accordance with the recording order of the playing management information recorded in the management file, including: first reading means configured to read out the first entry information and the second entry information from the content management file; and second reading means configured to read out the playing management information from the management file in accordance with the recording order of the second identifier of the second entry information.

The playing device enables the first reading means, with the content management file further including third entry information in which the second identifier is recorded in accordance with the recording order of file information including the name of the management file which is recorded in an information file for each the management file, to further read out the third entry information from the content management file including the second entry information recording a third identifier for identifying the third entry information as the reference information; further including: third reading means configured to read out the file information recorded in the information file in the same recording order as the recording order of the third identifier of the third entry information.

The playing device enables the first entry information and the second entry information to be configured of a singular or plurality of fixed-length slots, enables the first identifier or the second entry identifier to indicate the slot number of the top slot of the singular or plurality of fixed-length slots, and enables the slot number to indicate the slot recording order of the content management file.

The playing device may further include third reading means configured to read out from a representative image file having image entry information including the representative image information of the moving image contents the image entry information for each piece of the playing management information, which enables the first reading means to read out the first entry information from the content management file having the first entry information including the attribute information which is a fourth identifier for identifying the image entry information.

The playing device may further include third reading means configured to read out from a metadata file having metadata entry information including metadata accompanied with the moving image content the metadata entry information for each piece of the playing management information, which enables the first reading means to read out the first entry information from the content management file having the first entry information including the attribute information which is a fifth identifier for identifying the metadata entry information.

The playing device enables the metadata entry information to be configured of a singular or plurality of fixed-length slots, enables the fifth identifier to indicate the slot number of the top slot of the singular or plurality of fixed-length slots, and enables the slot number to indicate the slot recording order of the metadata file.

A playing device according to the third aspect of the present invention, with a content management file including first entry information having, of a singular or plurality of moving image contents, the attribute information of the moving image contents for each piece of playing management information indicating a playing range serving as one recording unit, which is identified with a first identifier, recording a second identifier for identifying second entry information having the reference information to a management file recording the playing management information for each of the moving image contents, and second entry information recording the first identifier for identifying the first entry information in accordance with the recording order of the playing management information recorded in the management file, including the steps of: reading out the first entry information and the second entry information from the content management file; and reading out the playing management information from the management file in accordance with the recording order of the second identifier of the second entry information.

A program according to the third aspect of the present invention, with a content management file including first entry information having, of a singular or plurality of moving image contents, the attribute information of the moving image contents for each piece of playing management information indicating a playing range serving as one recording unit, which is identified with a first identifier, recording a second identifier for identifying second entry information having the reference information to a management file recording the playing management information for each of the moving image contents, and second entry information recording the first identifier for identifying the first entry information in accordance with the recording order of the playing management information recorded in the management file, which causes a computer to execute the steps of: reading out the first entry information and the second entry information from the content management file; and reading out the playing management information from the management file in accordance with the recording order of the second identifier of the second entry information.

With the first aspect of the present invention, a management file in which of a singular or plurality of moving image contents, playing management information indicating a playing range serving as one recording unit is recorded for each of the moving image contents is generated; and a content management file including first entry information having the attribution information of the moving image contents for each piece of the playing management information, and second entry information having reference information to the management file is generated; with a first identifier for identifying the first entry information being recorded in the second entry information in accordance with the recording order of the playing management information recorded in the management file; and with a second identifier for identifying the second entry information being recorded in the first entry information.

With the second aspect of the present invention, a management file in which of a singular or plurality of moving image contents, playing management information indicating a playing range serving as one recording unit is recorded for each of the moving image contents is generated; and a content management file including first entry information having the attribution information of the moving image contents for each piece of the playing management information, and second entry information having reference information to the management file is generated; with a first identifier for identifying the first entry information being recorded in the second entry information in accordance with the recording order of the playing management information recorded in the management file; and with a second identifier for identifying the second entry information being recorded in the first entry information.

With the third aspect of the present invention, with a content management file including first entry information having, of a singular or plurality of moving image contents, the attribute information of the moving image contents for each piece of playing management information indicating a playing range serving as one recording unit, which is identified with a first identifier, recording a second identifier for identifying second entry information having the reference information to a management file recording the playing management information for each of the moving image contents, and second entry information recording the first identifier for identifying the first entry information in accordance with the recording order of the playing management information recorded in the management file, the first entry information and the second entry information is read out from the content management file; and the playing management information is read out from the management file in accordance with the recording order of the second identifier of the second entry information.

### Advantageous Effects

As described above, according to the first aspect of the present invention, each of moving image contents can be recorded as multiple files each of which the data to be stored differs.

Also, according to the first aspect of the present invention, a moving image content can be recorded so as to play a moving image content having a desired attribute rapidly.

According to the second aspect of the present invention, each of moving image contents can be recorded as multiple files each of which the data to be stored differs.

Also, according to the second aspect of the present invention, a moving image content can be recorded so as to play a moving image content having a desired attribute rapidly.

According to the third aspect of the present invention, a moving image content recorded as multiple files each of which the data to be stored differs can be played.

Also, according to the third aspect of the present invention, a moving image content having a desired attribute can be rapidly played.

### Brief Description of the Drawings

[Fig. 1] Fig. 1 is a block diagram illustrating the configuration of a digital camera according to an embodiment of the present invention.
[Fig. 2] Fig. 2 is a diagram describing the configurations of directories of a recording medium, and files to be recorded in a recording medium.
[Fig. 3] Fig. 3 is a block diagram illustrating functions to be realized by a CPU for executing a program.
[Fig. 4] Fig. 4 is a diagram describing a content management file.
[Fig. 5] Fig. 5 is a diagram illustrating an example of one entry file to be stored in multiple property slots, and metadata as to one content to be stored in multiple data slots.
[Fig. 6] Fig. 6 is a diagram describing a timed metadata file.
[Fig. 7] Fig. 7 is a diagram describing a timed metadata file.
[Fig. 8] Fig. 8 is a flowchart describing recording moving image and still metadata recording processing.
[Fig. 9] Fig. 9 is a flowchart describing timed metadata file recording processing.
[Fig. 10] Fig. 10 is a flowchart describing still image and still metadata recording processing.
[Fig. 11] Fig. 11 is a flowchart describing metadata searching processing.
[Fig. 12] Fig. 12 is a diagram illustrating a thumbnail image example to be displayed on an LCD.
[Fig. 13] Fig. 13 is a flowchart describing an example of display processing.
[Fig. 14] Fig. 14 is a diagram describing playing of an image and moving image stream to be display on the LCD.
[Fig. 15] Fig. 15 is a flowchart describing an example of stream playing processing.
[Fig. 16] Fig. 16 is a flowchart describing another example of the display processing.
[Fig. 17] Fig. 17 is a flowchart describing yet another example of the display processing.
[Fig. 18] Fig. 18 is a diagram describing playing of an image and moving image stream to be display on the LCD.
[Fig. 19] Fig. 19 is a flowchart describing an example of the stream playing processing.
[Fig. 20] Fig. 20 is a flowchart describing yet another example of the display processing.
[Fig. 21] Fig. 21 is a diagram describing an image to be displayed on the LCD.
[Fig. 22] Fig. 22 is a flowchart describing stream playing or still image display processing.
[Fig. 23] Fig. 23 is a block diagram illustrating a function example to be realized by the CPU for executing the program.
[Fig. 24] Fig. 24 is a diagram describing a detailed example of a property file.
[Fig. 25] Fig. 25 is a diagram describing file entry and mark entry numbers.
[Fig. 26] Fig. 26 is a diagram describing file entry and mark entry numbers.
[Fig. 27] Fig. 27 is a diagram describing the configuration of a playlist file.
[Fig. 28] Fig. 28 is a flowchart describing an example of moving image recording processing.
[Fig. 29] Fig. 29 is a diagram illustrating a thumbnail image example to be displayed on the LCD.
[Fig. 30] Fig. 30 is a flowchart describing an example of moving image playing processing.
[Fig. 31] Fig. 31 is a flowchart describing an example of the moving image playing processing.
[Fig. 32] Fig. 32 is a block diagram illustrating another example of a detailed function to be realized by the CPU for executing the program.
[Fig. 33] Fig. 33 is a diagram describing a management file.
[Fig. 34] Fig. 34 is a diagram describing a management file.
[Fig. 35] Fig. 35 is a diagram describing another example of the details of a property file.
[Fig. 36] Fig. 36 is a flowchart describing another example of the moving image recording processing.
[Fig. 37] Fig. 37 is a flowchart describing another example of the moving image playing processing.
[Fig. 38] Fig. 38 is a flowchart describing another example of the moving image playing processing.

### Reference Numerals

11 digital camera, 35 recording medium, 36 control unit, 39 LCD, 42 GPS signal receiving unit, 81 CPU, 82 RAM, 83 flash ROM, 101 recording control unit, 102 playing control unit, 103 display control unit, 111 property file recording control unit, 112 thumbnail file recording control unit, 113 metadata file recording control unit, 114 content file recording control unit, 115 timed metadata file recording control unit, 121 timed metadata file generating unit, 131 sample generating unit, 132 moviebox generating unit, 141 searching unit, 142 property file playing control unit, 143 thumbnail file playing control unit, 144 metadata file playing control unit, 145 content file playing control unit, 146 timed metadata file playing control unit, 151 sample playing control unit, 152 moviebox playing control unit, 153 sample identifying unit, 154 clock computing unit, 301 property file generating unit, 302 thumbnail file generating unit, 303 metadata file generating unit, 304 playlist file generating unit, 321 entry reading unit, 322 thumbnail slot reading unit, 323 metadata slot reading unit, 324 playlist mark reading unit, 325 play item reading unit, 401 management file generating unit, 402 playlist information field reading unit

### Best Mode for Carrying Out the Invention

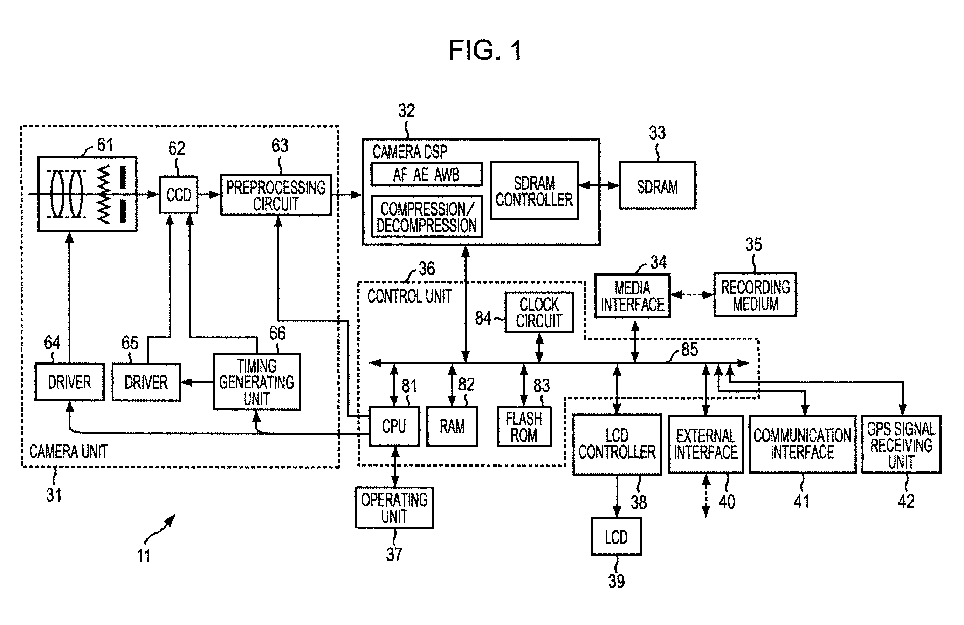

Fig. 1 is a block diagram illustrating the configuration of a digital camera 11 according to an embodiment of the present invention. The digital camera 11 includes a camera unit 31, a camera DSP (Digital Signal Processor) 32, SDRAM (Synchronous Dynamic Random Access Memory) 33, a media interface (hereafter, referred to as a media I/F) 34, a recording medium 35, a control unit 36, an operating unit 37, an LCD controller 38, an LCD 39, an external interface (hereafter, referred to as an external I/F) 40, a communication interface (hereafter, referred to as a communication I/F) 41, and a GPS (Global Positioning System) signal receiving unit 42.

The recording medium 35, which is configured detachably, is a medium in which data or a program or the like is recorded. Various types can be conceived as being employed as the recording medium 35, such as a so-called memory card employing semiconductor memory, an optical recording medium such as recordable DVD (Digital Versatile Disc), or recordable CD (Compact Disc), a magnetic disk, or the like, but with the present embodiment, description will be made assuming that a memory card in which semiconductor memory or a hard disc drive is built is employed as the recording medium 35.

The camera unit 31 includes an optical block 61, a CCD (Charge Coupled Device) 62, a preprocessing circuit 63, an optical block driver 64, a CCD driver 65, and a timing generating circuit 66. Here, the optical block 61 includes a lens, a focus mechanism, a shutter mechanism, an aperture mechanism, and so forth.

Also, the control unit 36 is configured of being connected with a CPU (Central Processing Unit) 81, RAM (Random Access Memory) 82, flash ROM (Read Only Memory) 83, and a clock circuit 84 through a system bus 85. The control unit 36 is made up of, for example, a general-purpose built-in-type microcomputer or a dedicated system LSI (Large Scale Integrated circuit) or the like. The control unit 36 controls the respective units of the digital camera 11.

Now, the RAM 82 is employed principally as a work area to temporarily store the intermediate results of processing or the like. Also, the flash ROM 83 stores various types of programs to be executed by a CPU 81, or data necessary for processing, or the like. Also, the clock circuit 84 can provide the current date, current day of the week, and current point-in-time, and also can provide shooting date and so forth.

During shooting of an image, the optical driver 64 forms a driving signal so as to operate the optical block 61 in response to the control from the control unit 36, and supplies this to the optical block 61 to operate the optical block 61. In response to the driving signal from the optical block driver 64, the focus mechanism, shutter mechanism, and aperture mechanism of the optical block 61 are controlled, and the optical block 61 captures an optical subject image, and provides an image regarding this on the CCD 62.

The CCD 62 subjects the optical image from the optical block 61 to photoelectric conversion, and outputs the electric signal of the image obtained from the conversion. That is to say, the CCD 62 operates in response to the driving signal from the CCD driver 65, captures the optical subject image from the optical block 61, and also supplies the captured subject image (image information) to the preprocessing circuit 63 as an electric signal based on the timing signal from the timing generating circuit 66 controlled by the control unit 36.

Note that a photoelectric conversion device such as a CMOS (Complementary Metal-Oxide Semiconductor) sensor or the like may be employed instead of the CCD 62.

Also, as described above, the timing generating circuit 66 forms a timing signal for providing a predetermined timing in response to the control from the control unit 36. Also, the CCD driver 65 forms a driving signal to be supplied to the CCD 62 based on the timing signal from the timing generating circuit 66.

The preprocessing circuit 63 performs CDS (Correlated Double Sampling) processing as to the image information of the electric signal supplied from the CCD 62 to maintain an S/N ratio in a good condition, and also performs AGC (Automatic Gain Control) processing to control gain, then performs A/D (Analog/Digital) conversion to form image data converted into a digital signal.

The image data converted into a digital signal at the preprocessing circuit 63 is supplied to the camera DSP 32. The camera DSP 32 subjects the supplied image data to camera signal processing such as AF (Auto Focus), AE (Auto Exposure), AWB (Auto White Balance), and so forth. The image data thus subjected to various types of adjustment is encoded with a predetermined encoding format, for example, such as JPEG (Joint Photographic Experts Group) or JPEG 2000 or the like, and supplied to the recording medium 35 which is mounted on the digital camera 11 through the system bus 85 and media I/F 34, and recorded in the recording medium 35 as a file, as described later. Also, an image data group is encoded employing an encoding format for encoding a moving image such as MPEG (Motion Picture Experts Group) or the like, whereby a moving image can be generated and recorded in the recording medium 35.

Note that a still image or moving image is an example of a content. Also, a file storing a still image or moving image is an example of a content file.

Also, the image data recorded in the recording medium 35 is read out from the recording medium 35 through the media I/F 34 in response to the operating input from a user which is accepted through the operating unit 37 made up of a touch panel or control keys or the like, and supplied to the camera DSP 32.

The camera DSP 32 decodes the encoded image data read out from the recording medium 35 and supplied through the media I/F 34, and supplies the decoded image data to the LCD controller 38 through the system bus 85. The LCD controller 38 forms an image signal to be supplied to the LCD 39 from the image data supplied thereto, and supplies this to the LCD 39. Thus, the image corresponding to the image data recorded in the recording medium 35 is displayed on the display screen of the LCD 39.

Also, the digital camera 11 according to the present embodiment is provided with the external I/F 40. The digital camera 11 is connected to, for example, an external personal computer through the external I/F 40, whereby in response to the supply of the image data from the personal computer, this can be recorded in the recording medium 35 mounted on the digital camera 11, or the image data recorded in the recording medium 35 mounted on the digital camera 11 can be supplied to the external personal computer or the like.

Also, the communication I/F 41 is made up of a so-called network interface card (NIC) or the like, and is connected to a network, thereby obtaining various types of image data and the other information through the network.

Further, the GPS signal receiving unit 42 receives a signal sent from a GPS satellite, and supplies GPS data indicating the current location to the control unit 36.

Also, it goes without saying that even information such as image data acquired through an external computer or network and recorded in a recording medium, as described above, can be also read out, played, and displayed on the LCD 39 with the digital camera 11 according to the present embodiment, thereby allowing a user to use this.

Note that the communication I/F 41 can also be provided as a cable interface in accordance with standards such as IEEE (Institute of Electrical and Electronic Engineers) 1394 or USB (Universal Serial Bus) or the like, or can also be provided as a wireless interface using light or electric waves in accordance with the standards of IEEE 802.11a, IEEE 802.11b, IEEE 802.11g or Bluetooth. That is to say, the communication I/F 41 may be either a cable interface or a wireless interface.

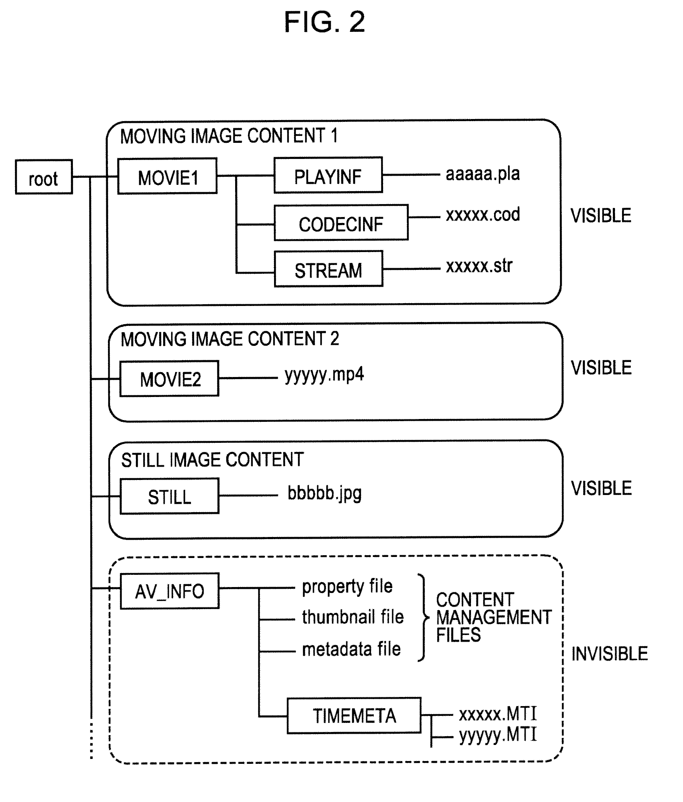

Fig. 2 is a diagram describing the configurations of directories in the recording medium 35, and files recorded in the recording medium 35.

The root, shown in Fig. 2, is a node showing the recording medium 35. Under root, two directories for disposing moving image contents, one directory for disposing still image contents, and one directory for disposing information relating to a content.

Of the two directories for storing moving image contents, one of the names thereof is set to be MOVIE1. With the directory of MOVIE1, a content made up of a stream, playlist, and image management information is disposed as files wherein the stream, playlist, and image management information are stored in individual files respectively.

A playlist indicates, for example, the playing starting point or ending point or the like of a predetermined stream with playing at the time of playing of a predetermined content. A playlist is an example of playing information. Image management information is information indicating the encoding format of a stream, and information for controlling readout or decoding of a stream. A stream is moving image data.

Under the directory of MOVIE1, a directory of which the name is PLAYINF, a directory of which the name is CODECINF, and a directory of which the name is STREAM are generated.

A file storing a playlist is disposed in the directory of PLAYINF. The extension of the name of a file storing a playlist is pla. A file storing image management information is disposed in the directory of CODECINF. The extension of the name of a file storing image management information is cod. Further, a file storing a stream is disposed in the directory of STREAM. The extension of the name of a file storing a stream is str.

The name of a file storing image management information is set to be the same as the name of a file storing a stream except for the extensions thereof, and accordingly, the file storing image management information and the file storing a stream are correlated to each other.

Also, of the two directories for storing a moving image content, the other of the names thereof is set to be MOVIE2. A content, which is a moving image, stored in one file is stored in the directory of MOVIE2. A content, which is a moving image, stored in one file is encoded with MPEG (Moving Picture Experts Group) 4, for example. The extension of the name of a file storing a content, which is a moving image, encoded with MPEG4 is mp4.

The name of a directory for disposing a still image content is STILL. A still image content is encoded with JPEG (Joint Photographic Experts Group), for example. The extension of the name of a file storing a content, which is a still image, encoded with JPEG is jpg.

Hereafter, file storing a playlists (hereafter, referred to as playlist files), file storing image management information (hereafter, referred to as clip information files), files storing streams (hereafter, referred to as stream files), and files storing a content which is a still image (hereafter, referred to as still image files) will be collectively referred to as content files.

The name of a directory for disposing information relating to a content is AV_INFO. A property file, a thumbnail file, and a metadata file are disposed in the directory of AV_INFO. A property file, a thumbnail file, and a metadata file each store information relating to a content.

A property file, which is an indispensable file, stores of information relating to a content, information necessary for readout of a content, information indicating the type of a content such as a moving image, a still image, audio, or the like, information necessary for readout of a thumbnail file or metadata file, and in the case of the corresponding content being a moving image, position information indicating the position where the moving image thereof was played and stopped last time (hereafter, referred to as a resumed point), and the other attribute information relating to a content. Also, a thumbnail file stores, in the case of a content being a moving image or still image, the image data of a thumbnail image, of information relating to the content.

Further, a metadata file stores, of information relating to a content, metadata other than the image data of a thumbnail image. In more detail, a metadata file stores, of information relating to a content, the metadata of the content, which is not time-sequence metadata.

For example, non-time-sequence metadata indicates, in the case of a content being a still image, the aperture, shutter speed at the time of shooting of the still image thereof, or shooting conditions such as ISO sensitivity and so forth, the size of the still image, or the specified value of a compression ratio in encoding of the still image, or the like. Also, non-time-sequence metadata indicates, in the case of a content being a moving image, with shooting of the moving image thereof, shooting conditions such as sensitivity not changed at the time of shooting, or the name of optical block 61 which is a so-called interchangeable lens, the size of the moving image, or the specified value of a compression ratio in encoding of the moving image, or the like.

Hereafter, property files, thumbnail files, and metadata files will be collectively referred to as content management files.

Moreover, under the directory of AV_INFO, a directory of which the name is TIMEMETA is generated. Of information relating to a content, a timed metadata file storing time-sequence metadata, which is the metadata of the content, is disposed in the directory of TIMEMETA.

Now, the reason why the directory of TIMEMETA is generated under the directory of AV_INFO is because a file under AV_INFO is a file storing data for managing a content, and is data unnecessary for making the data visible as to a user directly, so in the case of making all of the files under AV_INFO invisible as to a user, making the directory of AV_INFO invisible enables all the files under AV_INFO to be set in an invisible state in batch fashion.

Now, that a file or directory is set in an invisible state means that display relating to a file or directory is inhibited, such that the name or icon of a file or directory is not displayed.

The main reason why setting thus is because particularly in the case of the recording medium 35 being a hard disk drive (HDD), when the digital camera 11 which is an HDD camera is connected to a personal computer (PC) as mass storage through the USB (Universal Serial Bus), important files such as content management files and so forth is prevented from being deleted by a user. Further, the reason why the directory of TIMEMEI-A is generated one hierarchy below the directory of AV_INFO is because the use frequency of a timed metadata file is lower than the use frequency of content management files, and even if the content management files and timed metadata file are disposed in the same directory in a mixed manner, the access speed as to the content management files themselves is deteriorated, and accordingly, the directory of TIMEMETA is generated one hierarchy below the directory of AV_INFO to prevent such a situation.

A specific method for setting an invisible state is, for example, in the case of the recording medium 35 being a hard disk drive (HDD), to turn on a flag for making the target directory entry of the file system invisible.

Further, as timing for setting an invisible state, for example, in the case of the digital camera 11 being connected to a personal computer through the USB, i.e., in the case of the digital camera 11 being connected to a personal computer as mass storage, when the digital camera 11 senses the connection (when receiving a signal to the effect that connection has been performed correctly from the personal computer serving as the host), the flag for making the target directory of the file system invisible is turned on.

For example, time-sequence metadata is, in the case of a content being a moving image, determined to be a predetermined time-interval frame of shooting moving image frames, or indicates the position where a moving image is being captured, shooting conditions such as aperture or shutter speed or the like which is changed during shooting of the moving image thereof, the level of audio which is recorded along with a moving image, or the like.

The name of a timed metadata file is to be the same name as the name of a file storing a content which is a moving image to which the stored metadata is correlated. In more detail, for example, of the name of a timed metadata file, the portion excluding the extension is to be the same as the portion excluding the extension of the name of a file storing a content which is a moving image, disposed in the directory of MOVIE2. Also, for example, of the name of a timed metadata file, the portion excluding the extension is to be the same as the portion excluding the extension of the name of a file storing a stream disposed in the directory of MOVIE1.

Thus, a timed metadata file and a file storing a content are correlated to each other.

The extension of the name of a timed metadata file is MTI.

Time-sequence metadata will be referred to as dynamic metadata, and non-time-sequence metadata will be referred to as still metadata. Also, a content having a length in the time direction such as a moving image or audio or the like, i.e., a time-sequence content will be referred to as a dynamic content, and a content having no length in the time direction such as a still image or the like, i.e., a non-time-sequence content will be referred to as a still content.

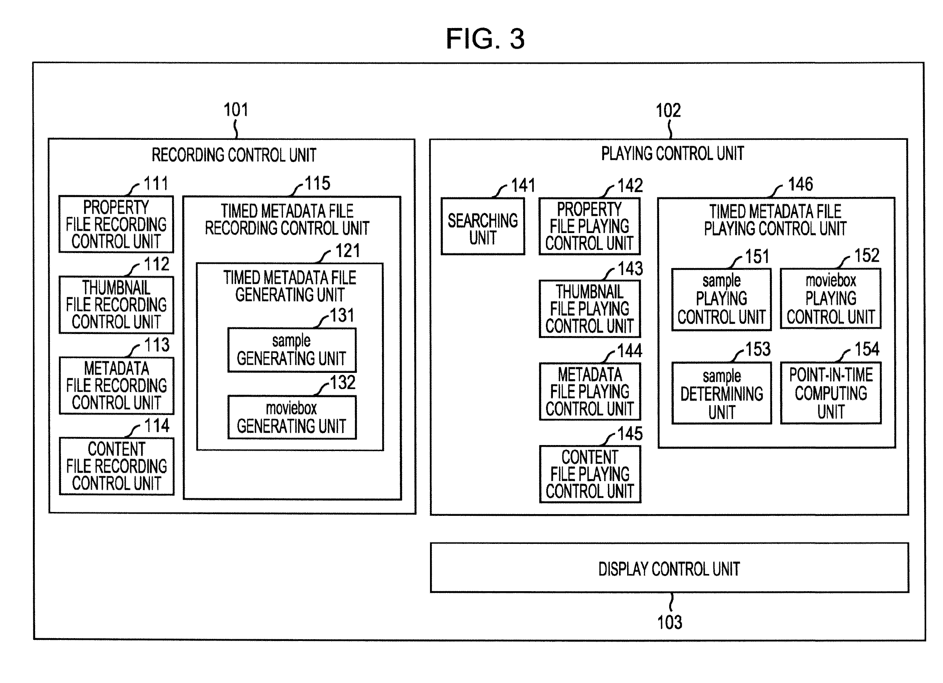

Fig. 3 is a block diagram illustrating functions realized by the CPU 81 for executing a program. The CPU 81 executes the program, whereby a recording control unit 101, a playing control unit 102, and a display control unit 103 are realized.

The recording control unit 101 controls recording of a content or information relating to a content to the recording medium 35. The recording control unit 101 is configured of a property file recording control unit 111, a thumbnail file recording control unit 112, a metadata file recording control unit 113, a content file recording control unit 114, and a timed metadata file recording control unit 115.

The property file recording control unit 111 controls recording a property file to the recording medium 35. The thumbnail file recording control unit 112 controls recording of a thumbnail file to the recording medium 35. The metadata file recording control unit 113 controls recording of a metadata file to the recording medium 35.

The content file recording control unit 114 controls recording of a content file to the recording medium 35.

The timed metadata file recording control unit 115 controls recording of a timed metadata file to the recording medium 35. The timed metadata file recording control unit 115 includes a timed metadata file generating unit 121.

The timed metadata file generating unit 121 generates a timed metadata file. Further, the timed metadata file generating unit 121 includes a sample generating unit 131 and a moviebox generating unit 132. The sample generating unit 131 generates, of a timed metadata file, a sample for storing each piece of time-sequence metadata. The moviebox generating unit 132 generates, of a timed metadata file, a moviebox where data necessary for readout of a sample is disposed. The details of a sample and movie box (moviebox) will be described later.

The playing control unit 102 controls playing of a content or information relating to a content recorded in the recording medium 35. The playing control unit 102 is configured of a searching unit 141, a property file playing control unit 142, a thumbnail file playing control unit 143, a metadata file playing control unit 144, a content file playing control unit 145, and a timed metadata file playing control unit 146.

The searching unit 141 searches various types of data stored in a property file, metadata file, or timed metadata file.

The property file playing control unit 142 controls playing of a property file recorded in the recording medium 35. The thumbnail file playing control unit 143 controls playing of a thumbnail file recorded in the recording medium 35.

The metadata file playing control unit 144 controls playing of a metadata file recorded in the recording medium 35. The content file playing control unit 145 controls playing of a content file recorded in the recording medium 35.

The timed metadata file playing control unit 146 controls playing of a timed metadata file recorded in the recording medium 35.

The timed metadata file playing control unit 146 includes a sample playing control unit 151, a moviebox playing control unit 152, a sample determining unit 153, and a point-in-time computing unit 154.

The sample playing control unit 151 controls, of a timed metadata file, playing of a sample storing each piece of time-sequence metadata. The moviebox playing control unit 152 controls playing of a movie box (moviebox) where data necessary for readout of a sample, of a timed metadata file, is disposed.

The sample determining unit 153 determines, in the case of an image corresponding to timed metadata stored in a timed metadata file being displayed on the LCD 39, of the displayed image, a sample in which time-sequence metadata is stored corresponding to the image specified by a user.

The point-in-time computing unit 154 computes point-in-time in a content corresponding to the specified sample.

The display control unit 103 controls display of a moving image or still image which is a content, or an image corresponding to information relating to a content to the LCD 39.

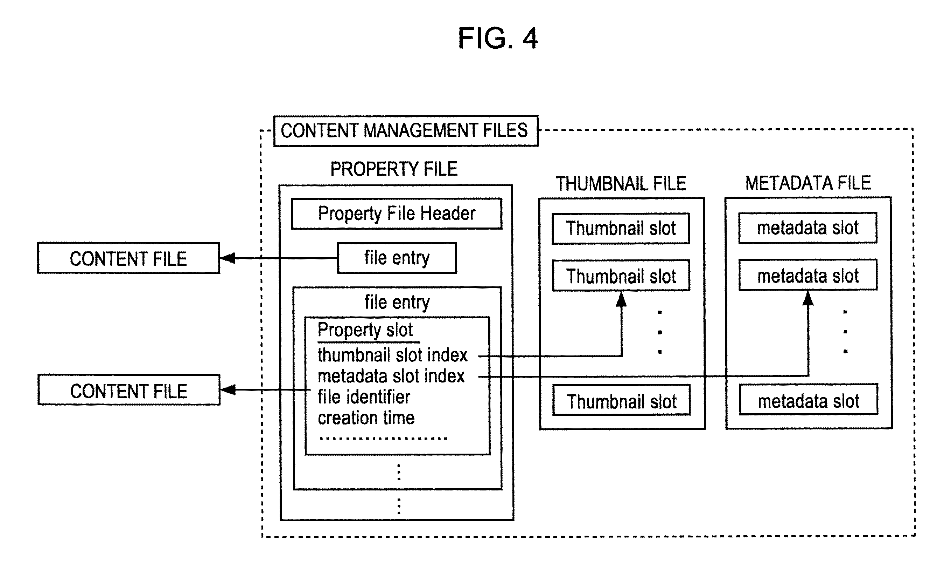

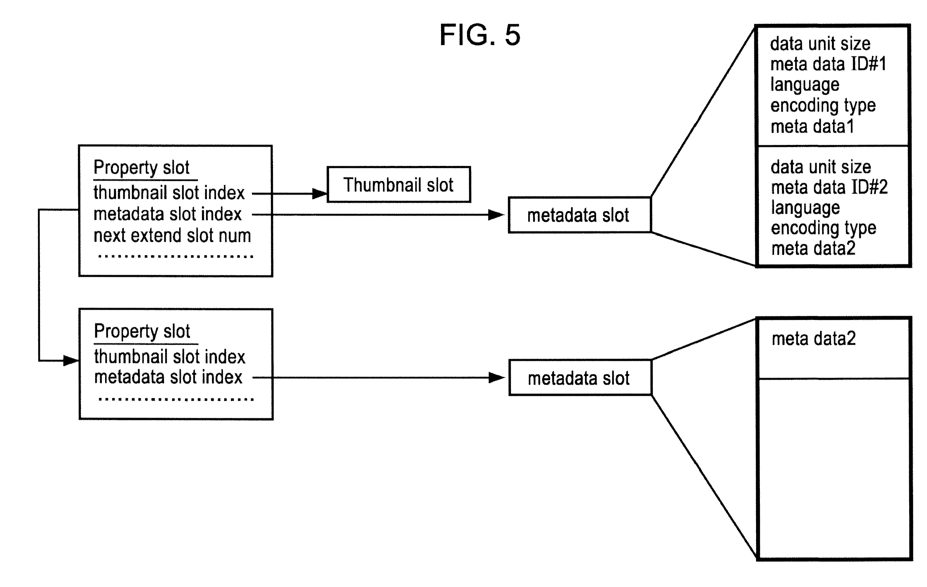

Next, description will be made regarding a content management file with reference to Fig. 4 and Fig. 5.

As shown in Fig. 4, a property file, a thumbnail file, and a metadata file serving as content management files are, as to one recording medium 35, recorded in the recording medium 35 thereof each at a time. Even in the case of multiple content files being recorded in the recording medium 35, one property file, one thumbnail file, and one metadata file of each content file are recorded in the recording medium 35.

A singular property file header, and a singular or multiple file entries are disposed in a property file.

A property file header is described with the data quantity of each of a property slot, a thumbnail slot, and a metadata slot, the name of the corresponding thumbnail file, and the name of the corresponding metadata file, and so forth. In the case of multiple thumbnail files or multiple metadata files existing, a thumbnail file or metadata file making up a content management file along with the property file thereof is determined with the name of a thumbnail file or the name of a metadata file.

Data or the like for reading out a content file, thumbnail file, or metadata file is disposed in a file entry with a property slot as a unit. That is to say, one file entry is stored in a singular or multiple property slots. A property slot is a recoding region with fixed recording capacity. That is to say, in the case of multiple property slots being provided in a property file, the property slots thereof have the same recording capacity.

Now, a file entry is distinguished with physical recording order within a property file of a primary slot of property slots making up the file entry. The details of the relation between a file entry and a primary slot will be described later.

The image data of a thumbnail image is stored in a thumbnail file with a thumbnail slot as a unit. A thumbnail slot is a recoding region with fixed recording capacity. That is to say, in the case of multiple thumbnail slots being provided in a thumbnail file, the thumbnail slots thereof have the same recording capacity.

Non-time-sequence metadata, which is the metadata of a content, is stored in a metadata file with a metadata slot as a unit. A metadata slot is a recoding region with fixed recording capacity. That is to say, in the case of multiple metadata slots being provided in a metadata file, the metadata slots thereof have the same recording capacity.

Note that the recording capacity of a property slot, the recording capacity of a thumbnail slot, and the recording capacity of a metadata slot may be the same or may differ.

Hereafter, when there is no need to distinguish each of a property slot, thumbnail slot, and metadata slot, each will be referred to simply as a slot.

Thus, a property slot, thumbnail slot, and metadata slot are each recording regions with fixed recording capacity, and are each disposed in a property file, thumbnail file, and metadata file in order. Each proper slot in a property file, each thumbnail slot in a thumbnail file, and each metadata slot in a metadata file are distinguished with physical recording order (hereafter, recording order will be referred to as number) within each file. That is to say, a distinction ID for distinguishing a slot is not recorded in each slot. This is for preventing reassigning of distinction IDs, and management of distinction IDs so as not to be duplicated within a property file, thumbnail file, or metadata file, in the case of adding or deleting of each slot being performed accompanied with adding or deleting of a content.

Thus, a property slot, thumbnail slot, or metadata slot can be accessed more rapidly.

A thumbnail slot index, a metadata slot index, a file identifier, creation time, or the like is disposed in a property slot of a file entry. A file identifier indicates the position where the content file indicated with a file entry is recorded, e.g., the path of a content file in the recording medium 35. A thumbnail slot index indicates a thumbnail slot number where the image data of the thumbnail image of a content stored in the content file indicated with a file entry is stored. A metadata slot index indicates a metadata slot number where the metadata of a content stored in the content file indicated with a file entry is stored.

Creation time indicates date and point-in-time when the content file indicated with a file entry was generated.

In the case in which a file entry cannot be stored in one property slot, a property slot is newly secured within a property file, and the file entry is stored in the multiple property slots. In this case, a new property slot number is stored in the original property slot.

A thumbnail slot and metadata slot are the same as a property slot.

Thus, data with desired data quantity can be stored regardless of the recording capacity of a property slot, thumbnail slot, or metadata slot.

Fig. 5 is a diagram illustrating an example of one file entry stored in multiple property slots, and metadata as to one content stored in multiple metadata slots.

As shown in Fig. 5, each of property slots is managed with a number (number means physical recording order within a property file). With the example shown in Fig. 5, one file entry is stored in the property slot at the upper left of Fig. 5, and the property slot at the lower left of Fig. 5.

The next extend slot number in the property slot at the upper left of Fig. 5 indicates the number of the property slot at the lower left of Fig. 5, which stores the file entry following the property slot thereof.

Now, of the property slot at the upper left and the property slot at the lower left of Fig. 5, the primary slot is the property slot at the upper left. As described above, a file entry is distinguished with physical recording order within the property slot of the primary slot of property slots making up the file entry. For example, in the case of the number of the property slot at the upper left of Fig. 5 being 1, and the number of the property slot at the lower left being 2, the file entry stored in the property slot at the upper left and the property slot at the lower left of Fig. 5 is distinguished and managed with the number of 1.

Also, for example, though not shown in the drawing, in the case of one file entry being stored in a property slot of which the number is 1, and a property slot of which the number is 2, and a property slot of which the number is 3, when the next extend slot number at the property slot with the number of 3 is 1, and the next extend slot number at the property slot with the number of 1 is 2, the primary slot is the property slot with the number of 3, so the file entry stored in the property slot with the number of 1, the property slot with the number of 2, and the property slot with the number of 3 is distinguished and managed with the number of 3.

Also, each of metadata slots is managed with a number (number means physical recording order within a metadata file). With the example shown in Fig. 5, metadata as to one content is stored in the metadata slot at the upper right of Fig. 5, and the metadata slot at the lower right of Fig. 5.

With the metadata slots in Fig. 5, data unit size at the upper side, metadata ID#1, language at the upper side, and encoding type at the upper side are data regarding metadata 1, and data unit size at the lower side, metadata ID#2, language at the lower side, and encoding type at the lower side are data regarding metadata 2. That is to say, data unit size at the upper side, metadata ID#1, language at the upper side, encoding type at the upper side, and metadata 1 are taken as one configuration, data unit size at the lower side, metadata ID#2, language at the lower side, and encoding type at the lower side, and metadata 2 are taken as one configuration.

Data unit size at the upper side with the metadata slot at the upper right of Fig. 5 indicates the data quantity of data unit size thereof, metadata ID#1, language at the upper side, and encoding type at the upper side, and metadata 1. Metadata ID#1 determines the type of metadata 1. Language at the upper side determines a language to describe metadata 1. Encoding type at the upper side indicates the encoding format of metadata 1. Metadata 1 is predetermined metadata relating to a content.

Data unit size at the lower side with the metadata slot at the upper right of Fig. 5 indicates the data quantity of data unit size thereof, metadata ID#2, language at the lower side, and encoding type at the lower side, and metadata 2. Metadata ID#2 determines the type of metadata 2. Language at the lower side determines a language to describe metadata 2. Encoding type at the lower side indicates the encoding format of metadata 2. Metadata 2 is metadata which is divided into and stored in the metadata slot at the upper right of Fig. 5 and the metadata slot at the lower right of Fig. 5, and is predetermined metadata relating to a content. Metadata 2 is metadata which differs from metadata 1.

With the example shown in Fig. 5, the metadata slot index of the property slot at the upper left indicates the number of the metadata slot at the upper right of Fig. 5, and the metadata slot index of the property slot at the lower left indicates the number of the metadata slot at the lower right of Fig. 5.

Thus, a metadata file has a configuration including data unit size, metadata ID, language, encoding type, and metadata as components.

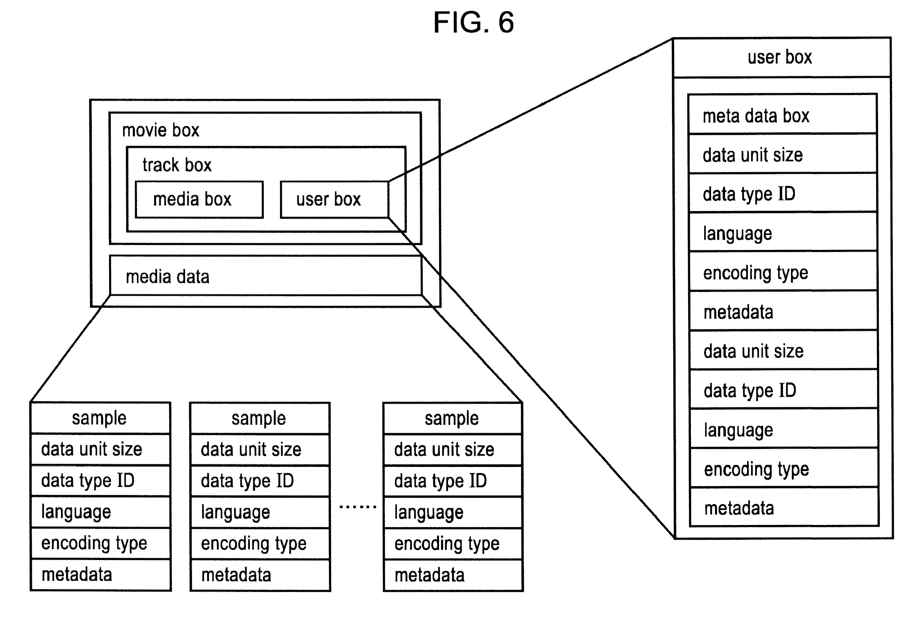

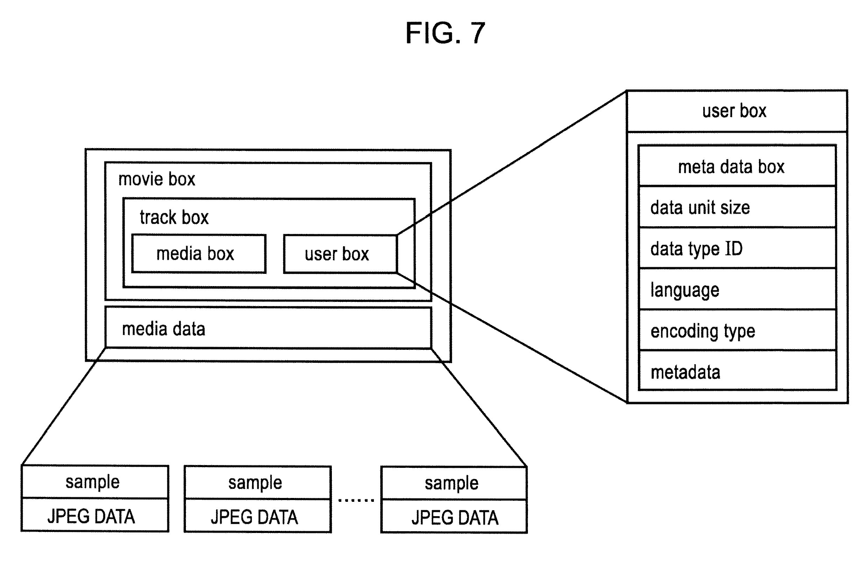

Next, description will be made regarding a timed metadata file with reference to Fig. 6 and Fig. 7. A timed metadata file employs a file format (hereafter, referred to MP4 file format) in accordance with the standard of ISO (International Organization for Standardization) /IEC (International Electrotechnical Commission) 14496.

Fig. 6 is a diagram illustrating the configuration of a timed metadata file storing time-sequence metadata showing a position at predetermined point-in-time.

A timed meta data file is configured of a movie box and media data.

A movie box has the same configuration as moov box in the MP4 file format, which is a hierarchical configuration. Various types of control information for controlling readout of metadata stored in a timed metadata file are disposed in a movie box.

Media data has the same configuration as mdat box (Media data container) in the MP4 file format. Metadata is disposed in media data.

A track box made up of a media box and a user box is disposed in a movie box.

A track box is generated according to the type of metadata to be controlled, and has the same configuration as track box in the MP4 file format. With the example shown in Fig. 6, only one track made up of metadata exists, and metadata serving as a track can be controlled, whereby metadata can be read/written more rapidly.

Also, a media box has the same configuration as mdia box in the MP4 file format. Further, a user box is equivalent to uuid box of track box in the MP4 file format. Uuid box is a box reserved for private extension of a user.

Information for randomly accessing metadata disposed in metadata, such as metadata playing information, random access information, and so forth is disposed in a media box.

For example, metadata playing information having the same configuration as stts box of stbl box of minf box at the MP4 file format is disposed in a media box. Metadata playing information indicates, for example, the time of each sample of later-described media data. That is to say, metadata playing information is the time of a content to which metadata is correlated, which is the time of each piece of time-sequence metadata each stored as samples.

In more detail, for example, metadata playing information indicates that the time of metadata of a first sample is 0.5 seconds, the time of metadata of a second sample is 1.0 second, and the time of metadata of a third sample is 0.8 seconds, and similarly, the time of metadata of n'th sample is a second. Thus, for example, in the case of a content which is a moving image being played, it can be understood that the metadata corresponding to the time of 1.7 seconds passing from the top of a content is stored in the third sample.

That is to say, of time-sequence metadata relating to a content which is a moving image, the metadata corresponding to predetermined point-in-time in time of the content thereof can be determined with reference to metadata playing information.

Also, conversely, of time-sequence metadata relating to a content which is a moving image, upon one piece of metadata being specified, point-in-time in time of the content thereof corresponding to the specified metadata can be determined with reference to metadata playing information.

For example, random access information having the same configuration as stsz box of stbl box of minf box at the MP4 file format is disposed in a media box. Random access information indicates, for example, the data quantity of each sample of later-described media data.

For example, of time-sequence metadata relating to a content which is a moving image, the metadata corresponding to predetermined point-in-time in time of the content thereof can be rapidly randomly accessed with reference to random access information.

A user box is configured so as to include a metadata box (meta data box). Data unit size, data type ID, language, encoding type, metadata, data unit size, data type ID, language, encoding type, and metadata are disposed in order in a user box.

With a metadata box, data unit size at the upper side, data type ID at the upper side, language at the upper side, and encoding type at the upper side are data regarding metadata at the upper side, and data unit size at the lower side, metadata ID at the lower side, language at the lower side, and encoding type at the lower side are data regarding metadata at the lower side. That is to say, data unit size at the upper side, data type ID at the upper side, language at the upper side, encoding type at the upper side, and metadata at the upper side have one configuration, and data unit size at the lower side, data type ID at the lower side, language at the lower side, encoding type at the lower side and metadata at the lower side have one configuration.

Data unit size at the upper side with a metadata box indicates the data quantity of data unit size thereof, data type ID at the upper side, language at the upper side, encoding type at the upper side, and metadata at the upper side. Data type ID at the upper side is set to, for example, 0000000Ah, which indicates that metadata at the upper side in a metadata box is metadata indicating that this track is a track for controlling time-sequence metadata disposed as a track which is a sample.

Language at the upper side determines a language to describe metadata at the upper side. Encoding type at the upper side indicates the encoding format of metadata at the upper side. Metadata at the upper side is metadata indicating that this track is a track for controlling time-sequence metadata disposed as a track which is a sample.

Data unit size at the lower side with a metadata box indicates the data quantity of data unit size at the lower side, data type ID at the lower side, language at the lower side, encoding type at the lower side, and metadata at the lower side. Data type ID at the lower side is set to, for example, 0000000Bh, which indicates that metadata at the lower side in a metadata box is metadata indicating that this track is a track for specifically controlling time-sequence metadata disposed as a track which is a sample.

Language at the lower side determines a language to describe metadata at the lower side. Encoding type at the lower side indicates the encoding format of metadata at the lower side. Metadata at the lower side is metadata indicating that this track is a track for controlling time-sequence metadata disposed as a track which is a sample.

For example, metadata at the lower side which is 0000001Ah indicates that time-sequence metadata disposed as a track which is a sample is data indicating a position at predetermined point-in-time.

For example, metadata at the lower side which is 0000002Ah indicates that time-sequence metadata disposed as a track which is a sample is camera information such as aperture, shutter speed, zoom, or the like at predetermined point-in-time.

For example, metadata at the lower side which is 0000003Ah indicates that time-sequence metadata disposed as a track which is a sample is data indicating the level of first audio of GOP at predetermined point-in-time.

Media data is configured of a singular or multiple samples. A sample is the minimum unit which is controlled with a track.

Each sample is configured of data unit size, data type ID, language, encoding type, and metadata. That is to say, each sample has a configuration made up of data unit size, data type ID, language, encoding type, and metadata.

Data unit size with a sample indicates the data quantity of the sample. Data type ID with a sample is set to, for example, 0000001Ah, which indicates that metadata with the sample is data indicating a position at predetermined point-in-time.

Language with a sample determines a language to describe metadata with the sample. Encoding type with a sample indicates the encoding format of metadata with the sample. Metadata with a sample is, of time-sequence metadata, metadata at predetermined point-in-time. Note that it can also be said that metadata with a sample is, of time-sequence metadata, metadata at predetermined time.

Fig. 7 is a diagram illustrating the configuration of a timed metadata file storing time-sequence metadata which is the data of the frame for each predetermined time, of frames making up a content which is a moving image.

Of the frames of a moving image, a timed metadata file storing the data of the frame for each predetermined time is configured of a movie box and media data, in the same way as with the case of Fig. 6. Data for controlling readout of metadata stored in a timed metadata file is disposed in a movie box. Metadata is disposed in media data.

A track box made up of a media box and a user box is disposed in a movie box. Information for randomly accessing metadata disposed in media data, and so forth are disposed in a media box.

A user box is configured so as to include a metadata box. A metadata box is disposed with data unit size, data type ID, language, encoding type, and metadata in order.

Of the frames of a moving image, with a timed metadata file storing the data of the frame for each predetermined time, data unit size, data type ID, language, and encoding type within a metadata box are data regarding metadata. That is to say, of the frames of a moving image, with a timed metadata file storing the data of the frame for each predetermined time, data unit size, data type ID, language, and encoding type within a metadata box have one configuration.

Of the frames of a moving image, with a timed metadata file storing the data of the frame for each predetermined time, Data unit size with a metadata box indicates the data quantity of data unit size thereof, data type ID, language, encoding type, and metadata. Data type ID is set to, for example, 0000000Ch, which indicates that metadata with a metadata box is, of the frames of a moving image, metadata for controlling the data of the frame for each predetermined time.

Language determines a language to describe metadata. Encoding type indicates the encoding format of metadata.

Of the frames of a moving image, with a timed metadata file storing the data of the frame for each predetermined time, the metadata of a metadata box is, of the frames of a moving image, metadata for controlling the data of the frame for each predetermined time. That is to say, it can be found from metadata of a metadata box that JPEG data which is the data of the frame for each predetermined time, of the frames of a moving image is stored as a track.

Media data is configured of a singular or multiple samples. A sample is the minimum unit to be controlled with a track.

Each sample is made up of JPEG data. JPEG data with a sample is the data of a frame for predetermined time, of the frames of a moving image, encoded with JPEG.

In more detail, for example, in the case of the stream of a moving image being encoded with MPEG4, JPEG data with a sample is data wherein of the frames of a moving image, for each interval of GOP (Group of Pictures) the data of one frame extracted from each of GOP is encoded with JPEG.

Thus, a timed metadata file has a configuration including moviebox, media data, track box, media box, user box, data unit size, metadata ID, language, encoding type, and metadata as components.

Focusing on data unit size, metadata ID, language, encoding type, and metadata, it can be said that a timed metadata file has the same configuration as that of a metadata file.

A timed metadata file and a metadata file have the same configuration, which leads to the same recording and reading (playing) procedures of both the files, whereby hardware or a program for recording or readout can be shared or standardized.

Hereafter, time-sequence metadata will be referred to as timed metadata. Also, of metadata, the other metadata of timed metadata, i.e., non-time-sequence metadata will be referred to as still metadata.

Next, description will be made regarding recording processing.

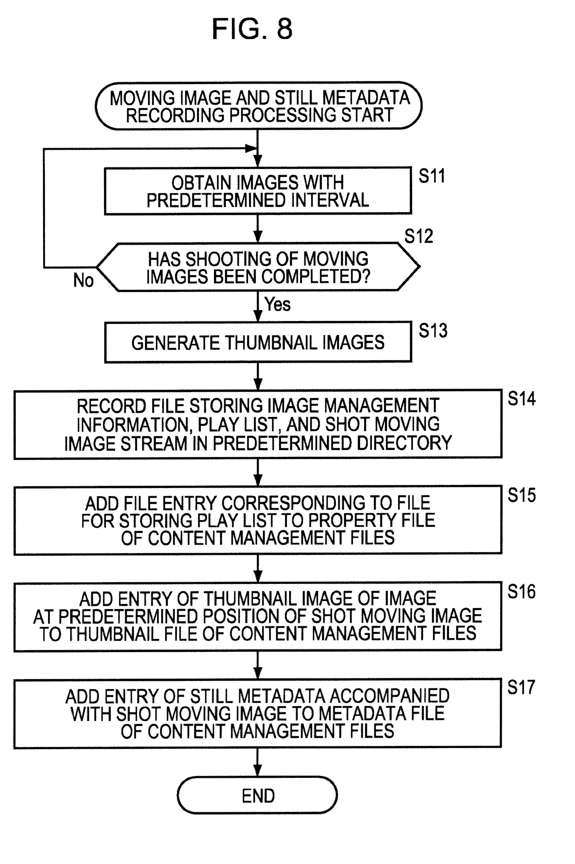

Fig. 8 is a flowchart describing moving image and still metadata recording processing to be executed in the case of starting recording of a moving image. In step S11, the content file recording control unit 114 of the recording control unit 101 acquires an image, i.e., frames making up a moving image at a predetermined interval from the camera DSP 32.

In step S12, the content file recording control unit 114 determines regarding whether or not capturing of a moving image has been completed based on a signal corresponding to operations of a user from the operating unit 37, and in the case of determining that capturing of a moving image has not been completed, the processing returns to step S11, where image acquiring processing is repeated.

In step S12, in the case of determining that capturing of a moving image has been completed, the processing proceeds to step S13, where the thumbnail file recording control unit 112 generates a thumbnail image from a predetermined image, of images acquired in step S11. For example, the thumbnail file recording control unit 112 generates a thumbnail image from the first frame of a moving image, the frame at the time of a scene being changed, or the frame when an audio level exceeding a predetermined threshold, or the like.

Note that an arrangement may be made wherein the thumbnail file recording control unit 112 executes processing for generating a thumbnail image in parallel with image acquiring processing in step S11.

In step S14, the content file recording control unit 114 generates image management information and a playlist, and records a clip information file, playlist file, and stream file storing the image management information, playlist, and the stream of the captured moving image respectively in a predetermined directory.

For example, the content file recording control unit 114 records the clip information file storing the image management information in a directory of which the directory name is CODECINF under a directory of which the directory name is MOVIE1, of the recording medium 35. The content file recording control unit 114 records the playlist file storing the playlist in a directory of which the directory name is PLAYINF under a directory of which the directory name is MOVIE1, of the recording medium 35.

Further, the content file recording control unit 114 records the stream file storing the stream of a moving image in a directory of which the directory name is STREAM under a directory of which the directory name is MOVIE1, of the recording medium 35.

Note that, for example, in the case of the data of a moving image being encoded with MPEG4, and the moving image being recorded in one file as a content, the content file recording control unit 114 records the file storing the content which is the moving image in a directory of which the directory name is MOVIE2, of the recording medium 35.

In step S15, the property file recording control unit 111 of the recording control unit 101 generates a file entry corresponding to the playlist file storing the playlist, and adds the file entry corresponding to the playlist file to the property file serving as a content management file.

For example, the property file recording control unit 111 adds the file entry corresponding to the playlist file storing the playlist, which is a file entry with a property slot as a unit, to the property file disposed in a directory of which the directory name is AV_INFO, of the recording medium 35.

Note that an arrangement may be made wherein the property file recording control unit 111 generates a file entry corresponding to the stream file storing the stream of a moving image, and adds the file entry corresponding to the stream file storing the stream of the moving image to the property file serving as a content management file.

In step S16, the thumbnail file recording control unit 112 of the recording control unit 101 adds the entry of the thumbnail image of an image at a predetermined position of a captured moving image to the thumbnail file serving as a content management file. That is to say, the thumbnail file recording control unit 112 stores the image data of the thumbnail image generated in step S13 in a thumbnail slot of the thumbnail file.

In step S17, the metadata file recording control unit 113 of the recording control unit 101 adds the entry of still metadata accompanied with a captured moving image to the metadata file serving as a content management file, and the processing ends. That is to say, the metadata file recording control unit 113 stores the still metadata of a captured moving image in a metadata slot of the metadata file.

Thus, while a moving image is recorded, a file entry is added to the property file, the image data of a thumbnail image is stored in the thumbnail file, and the still metadata of a captured moving image, i.e., non-time-sequence metadata is stored in the metadata file.

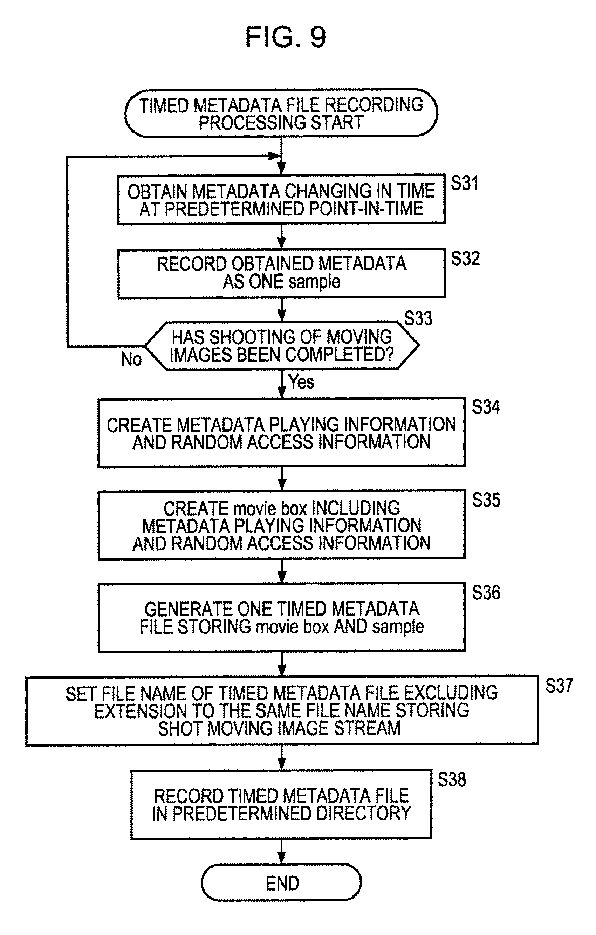

Next, description will be made regarding timed metadata file recording processing which is executed in parallel with the moving image and still metadata recording processing in Fig. 8, in the case of starting recording of a moving image. Fig. 9 is a flowchart describing the timed metadata file recording processing.

In step S31, the timed metadata file recording control unit 115 of the recording control unit 101 acquires metadata which changes in time, i.e., time-sequence metadata at predetermined point-in-time.

For example, the timed metadata file recording control unit 115 acquires GPS data indicating the current position from the GPS signal receiving unit 42 at predetermined point-in-time, thereby acquiring metadata representing the latitude and longitude of the current position.

Also, for example, the timed metadata file recording control unit 115 extracts a frame at predetermined point-in-time from the moving image recorded by the moving image and still metadata recording processing, thereby acquiring metadata which is the data of the frame at predetermined point-in-time, of frames making up a content which is a moving image. In this case, the timed metadata file recording control unit 115 encodes the metadata which is the data of the frame for each predetermined time using JPEG at the camera DSP 32, and takes this as JPEG data.

In step S32, the timed metadata file recording control unit 115 records the acquired metadata as one sample. That is to say, the sample generating unit 131 of the timed metadata file generating unit 121 of the timed metadata file recording control unit 115 generates one sample storing the acquired metadata.

For example, the sample generating unit 131 stores GPS data representing the current position with the latitude and longitude in a sample made up of data unit size, data type ID, language, encoding type, and metadata, shown in Fig. 6. In this case, GPS data representing the current position with the latitude and longitude is stored in a sample as sample metadata made up of data unit size, data type ID, language, encoding type, and metadata.

Also, for example, the sample generating unit 131 stores the JPEG data of the frame for each predetermined time in a sample as metadata, shown in Fig. 7.

In step S33, the timed metadata file recording control unit 115 determines regarding whether or not capturing of a moving image has been completed, and in the case of determining that capturing of a moving image has not been completed, the processing proceeds to step S31, where processing for acquiring time-sequence metadata to store this in a sample is repeated.

In step S33, in the case of determining that capturing of a moving image has been completed, time-sequence metadata will not be acquired any more, so the processing proceeds to step S34, where the moviebox generating unit 132 of the timed metadata file generating unit 121 of the timed metadata file recording control unit 115 generates metadata playing information and random access information.

For example, the moviebox generating unit 132 generates metadata playing information indicating the time length of each piece of metadata in time of a moving image, corresponding to point-in-time when metadata was acquired. Also, for example, the moviebox generating unit 132 generates random access information indicating the data quantity of each sample.

In step S35, the moviebox generating unit 132 generates a movie box including metadata playing information and random access information.

In step S36, the timed metadata file generating unit 121 generates one timed metadata file storing a movie box and a sample. In step S37, the timed metadata file recording control unit 115 sets the file name excluding the extension of the timed metadata file to the same name as the file name where the stream of a captured moving image is stored. The extension of the file name of the timed metadata file is determined beforehand, for example, set to be MTI.

Note that the timed metadata file recording control unit 115 may set the file name of the timed metadata file excluding the extension to the file name where the playlist regarding the stream of a captured moving image is stored.

In step S38, the timed metadata file recording control unit 115 records the metadata file in a predetermined directory such as the directory of TIMEMETA under the directory of AV_INFO of the recording medium 35, or the like, and the processing ends.

Thus, time-sequence metadata corresponding to a captured moving image is stored in the timed metadata file.

Next, description will be made regarding still image recording processing.

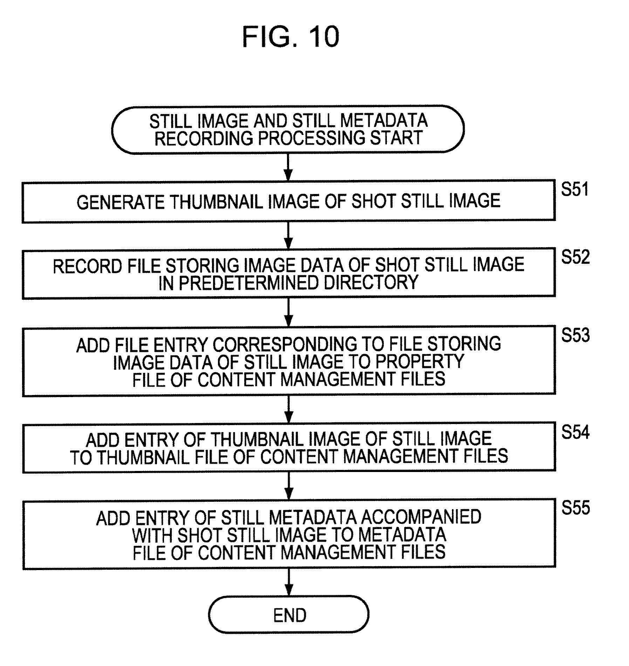

Fig. 10 is a flowchart describing still image and still metadata recording processing which is executed when shooting a still image. In step S51, the thumbnail file recording control unit 112 generates the thumbnail image of a photographed still image.

In step S52, the content file recording control unit 114 records a file storing the image data of a photographed still image in a predetermined directory. For example, the content file recording control unit 114 records a file storing the image data of a photographed still image in a directory of which the directory name is STILL, of the recording medium 35.

In step S53, the property recording control unit 111 of the recording control unit 101 generates a file entry corresponding to a file storing the image data of a still image, and adds the file entry corresponding to the file storing the image data of a still image to the property file serving as a content management file.

For example, the property file recording control unit 111 adds the file entry corresponding to a file storing the image data of a still image which is a file entry with a property slot as a unit to a property file disposed in the directory of which the directory name is AV_INFO, of the recording medium 35.

In step S54, the thumbnail file recording control unit 112 of the recording control unit 101 adds the entry of the thumbnail image of a photographed still image to the thumbnail file serving as a content management file. That is to say, the thumbnail file recording control unit 112 stores the image data of the thumbnail image generated in step S51 in a thumbnail slot of the thumbnail file.

In step S55, the metadata file recording control unit 113 of the recording control unit 101 adds the entry of the still metadata accompanied with a photographed still image to the metadata file serving as a content management file, and the processing ends. That is to say, the metadata file recording control unit 113 stores the still metadata of a photographed still image in a metadata slot of the metadata file.

Thus, while a still image is recorded, a file entry is added to the property file, the image data of a thumbnail image is stored in the thumbnail file, and the still data of a photographed still image, i.e., non-time-sequence metadata is stored in the metadata file.

Note that the timed metadata file recording control unit 115 does not record the timed metadata file in the case of a still image being photographed.

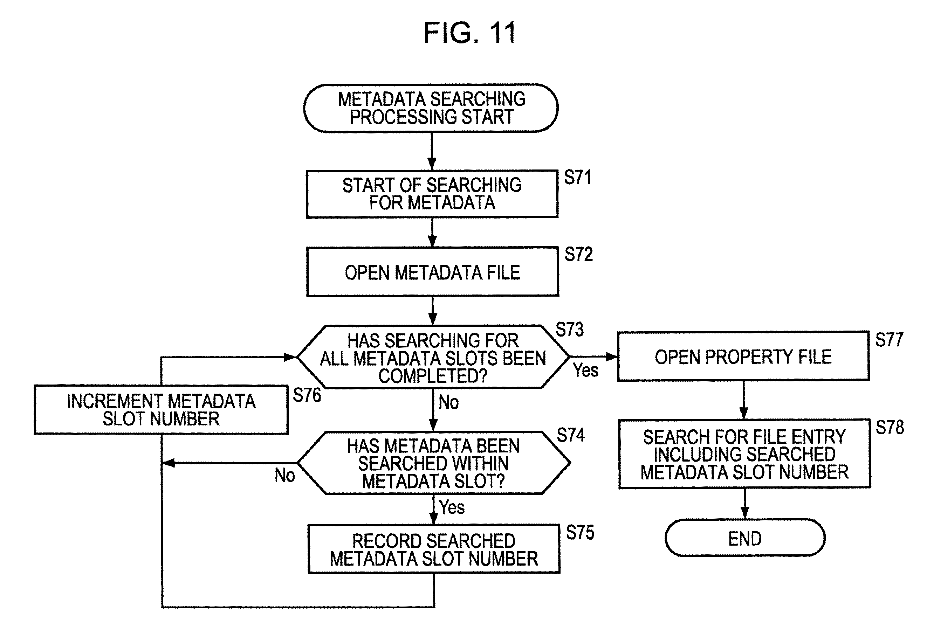

Fig. 11 is a flowchart describing metadata searching processing. In step S71, the searching unit 141 of the playing control unit 102 acquires a keyword corresponding to metadata to be searched from the operating unit 37, thereby starting searching of metadata. In step S72, the metadata file playing control unit 144 opens the metadata file.

In step S73, the searching unit 141 determines regarding whether or not searching of all of the metadata slots has been completed, and in the case of determining that searching of all of the metadata slots has not been completed, the processing proceeds to step S74, where a metadata slot is searched with the keyword, and determination is made regarding whether or not the keyword has been matched with metadata within the metadata slot having the number indicated with the current counter value of a counter.

In the event that determination is made in step S74 that the keyword has been matched with the metadata, the processing proceeds to step S75, where the searching unit 141 records the number of the metadata slot wherein the keyword has been matched with the metadata.

In the event that determination is made in step S74 that the keyword has not been matched with the metadata, step S75 is skipped.

In step S76, the searching unit 141 increments the counter by one, thereby counting up the number of the metadata slot, the processing returns to step S73, where metadata slot searching processing is repeated.

In the event that determination is made in step S73 that searching of all of the metadata slots has been completed, the processing proceeds to step S77, where the property file playing control unit 142 opens the property file. In step S78, the searching unit 141 searches the file entry including the matched slot number, and the processing ends.

The content file storing a content appended with the metadata corresponding to the keyword is opened based on the searched file entry, whereby the content thereof can be played.

Next, description will be made regarding an example of playing processing of a content which is a moving image employing the timed metadata file storing timed metadata indicating a position when a moving image is captured.

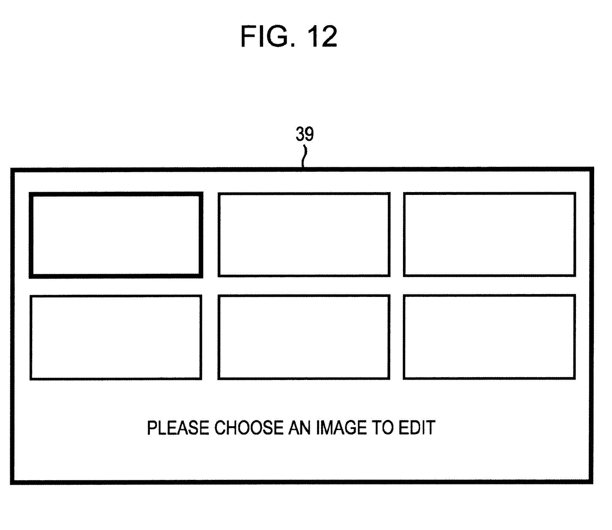

For example, in the case of playing a content which is a moving image, the thumbnail file playing control unit 143 reads out a thumbnail image stored in the thumbnail file serving as a content management file, and supplies this to the display control unit 103. In response to this, the display control unit 103 causes the LCD 39 to display, for example as shown in Fig. 12, six thumbnail images corresponding to moving images respectively.

The user operates the operating unit 37, thereby instructing one thumbnail image, of the thumbnail images displayed on the LCD 39.

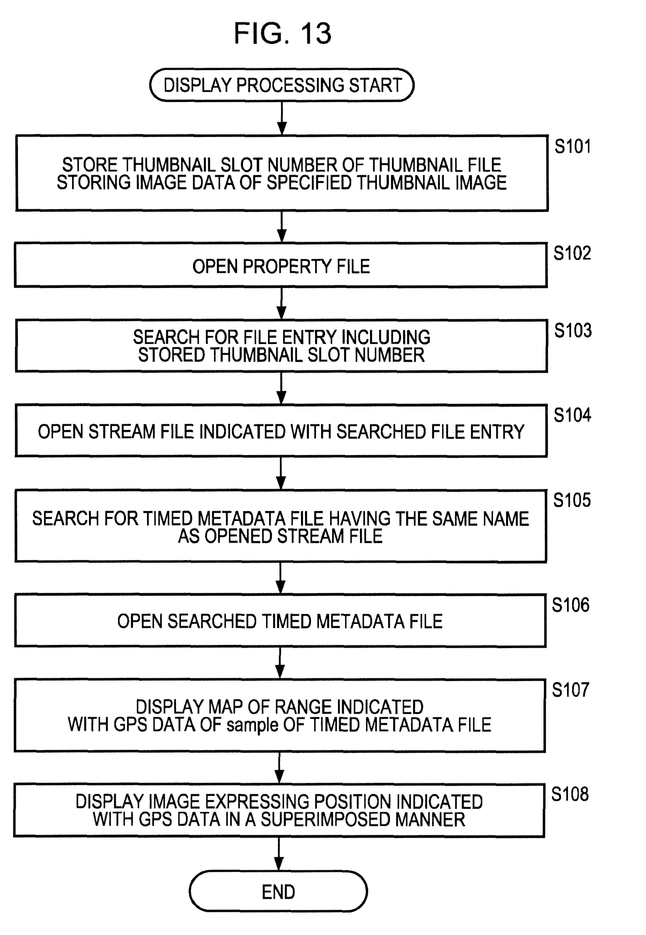

Fig. 13 is a flowchart describing an example of display processing which is executed in the case of one of the thumbnail images in Fig. 12 being specified. In step S101, the playing control unit 102 acquires the signal from the operating unit 37 corresponding to the operation of the user specifying one thumbnail image, and stores the thumbnail slot number of the thumbnail file, which stores the image data of the specified thumbnail image.

For example, upon thumbnail images being displayed on the LCD 39, the playing control unit 102 generates a table indicating the correspondence between a number specifying the thumbnail image displayed on the LCD 39 and a thumbnail slot number storing the image data of the thumbnail image. Upon a signal indicating the number of a thumbnail image being supplied from the operating unit 37 operated by the user, the playing control unit 102 extracts the thumbnail slot number corresponding to the thumbnail image number specified by the signal thereof, and stores the thumbnail slot number thereof.

In step S102, the property file playing control unit 142 opens the property file. In step S103, the searching unit 141 searches the file entry including the thumbnail slot number stored in step S101.

In step S104, the content file playing control unit 145 opens the stream file, which is a file storing a stream, indicated with the searched file entry. In step S105, the searching unit 141 searches the timed metadata file having the same name excluding the extension as the name of the opened stream file.

In step S106, the timed metadata file playing control unit 146 opens the searched timed metadata file. In step S107, the display control unit 103 causes the LCD 39 to display a map of the range indicated with the GPS data of the sample of the opened timed metadata file.

That is to say, the sample playing control unit 151 reads out and plays GPS data, which is metadata indicating a position, stored in the sample of the opened timed metadata file, and supplies this to the display control unit 103. The display control unit 103 causes the LCD 39 to display a map of the range indicated with the GPS data indicating the position based on map data stored in the recording medium 35 beforehand. For example, in the case of a position around the Tokyo station being indicated with GPS data, the display control unit 103 causes the LCD 39 to display a map around the Tokyo station.

In step S108, the display control unit 103 causes the LCD 39 to display an image displaying the position indicated with GPS data so as to be superimposed on the map image, and the processing ends. That is to say, the display control unit 103 causes the LCD 39 to display the image representing the position indicated with GPS data so as to be superimposed on the map image such that the image representing the position indicated with GPS data is disposed at the position indicated with the GPS data on the map.

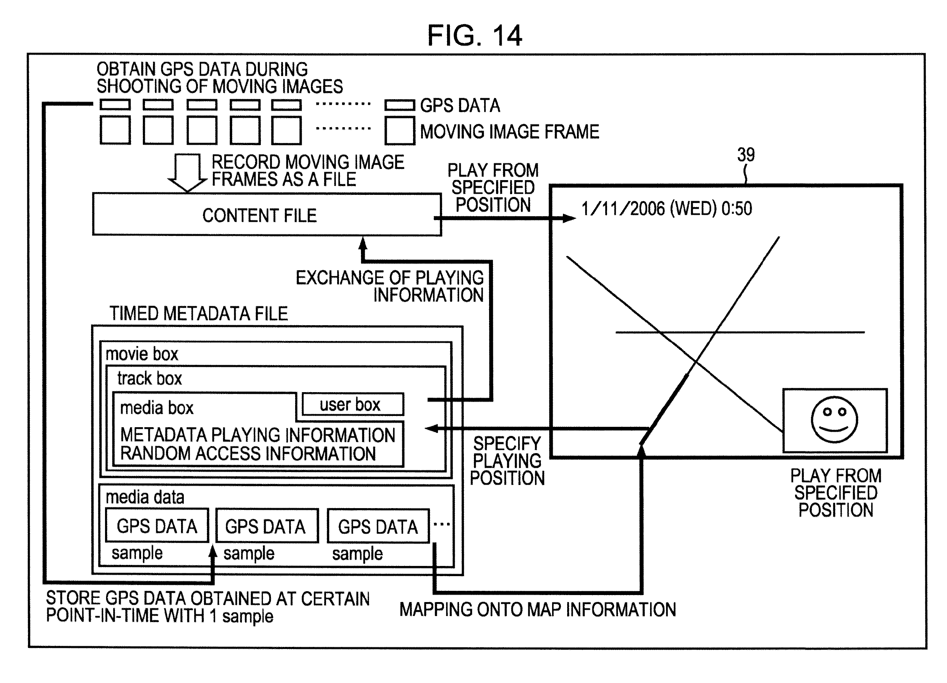

Upon the display processing being executed, for example, as shown in Fig. 14, an image wherein the image representing the position indicated with GPS data which is metadata, and the map are superimposed is displayed on the LCD 39.

With an example of an image to be displayed on the LCD 39, shown in the right side of Fig. 14, an upward-sloping thick line is an image representing the position indicated with GPS data. GPS data which is time-sequence metadata is acquired in a predetermined interval and recorded as a timed metadata file while a moving image is recorded, so upon a moving image being recorded and moved simultaneously, a route where the moving image is moved can be displayed on a map while the moving image is recorded.

Subsequently, a position displayed on the map is specified, whereby the stream of the moving image can be played from the portion recorded at the position thereof.

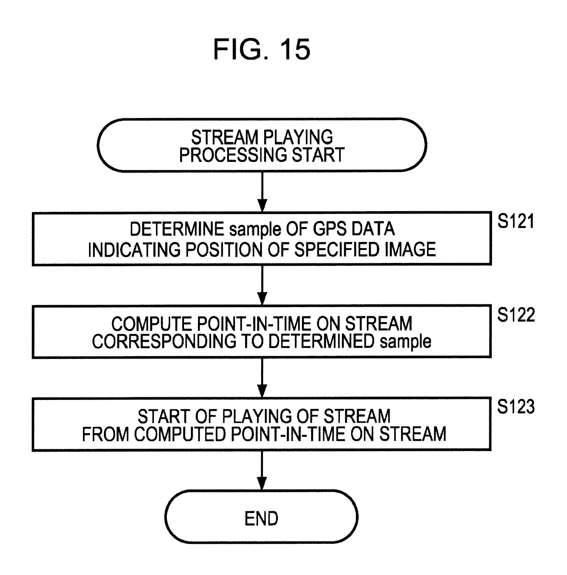

Fig. 15 is a flowchart describing an example of stream playing processing. In step S121, the sample determining unit 153 of the timed metadata file playing control unit 146 acquires the signal from the operating unit 37 corresponding to the operation of the user specifying a position, and determines the sample of GPS data indicating the position of the image specified.

For example, upon an image representing the position indicated with GPS data being displayed on the LCD 39, the sample determining unit 153 generates a table indicating the correspondence between the position on the screen of the LCD 39 which is the position of an image representing the position indicated with GPS data, and a number for determining a sample storing metadata which is the GPS data. Upon a signal indicating the position on the screen specified by the user being supplied from the operating unit 37 which is a touch panel provided on the LCD 39, the sample determining unit 153 extracts the number determining the sample corresponding to the position on the screen indicated with the signal thereof from the table, thereby determining the sample of the GPS data indicating the position of the image specified.

In step S122, the point-in-time computing unit 154 of the timed metadata file playing control unit 146 computes point-in-time relating to the stream corresponding to the determined sample.

That is to say, the moviebox playing control unit 152 of the timed metadata file playing control unit 146 reads out and plays metadata playing information stored in a media box. As shown in Fig. 14, metadata playing information is the time of each piece of time-sequence metadata each stored as a sample, which indicates the time of a content to which the metadata relates, so the point-in-time computing unit 154 computes point-in-time relating to the stream which is the content corresponding to the determined sample with reference to metadata playing information.

In step S123, the content file playing control unit 145 starts playing of the stream stored in the content file from point-in-time relating to the computed stream, and the processing ends. The display control unit 103 causes the LCD 39 to display the moving image from the portion captured at the position on the map specified on the screen.

Thus, a moving image captured at a desired position can be readily displayed.

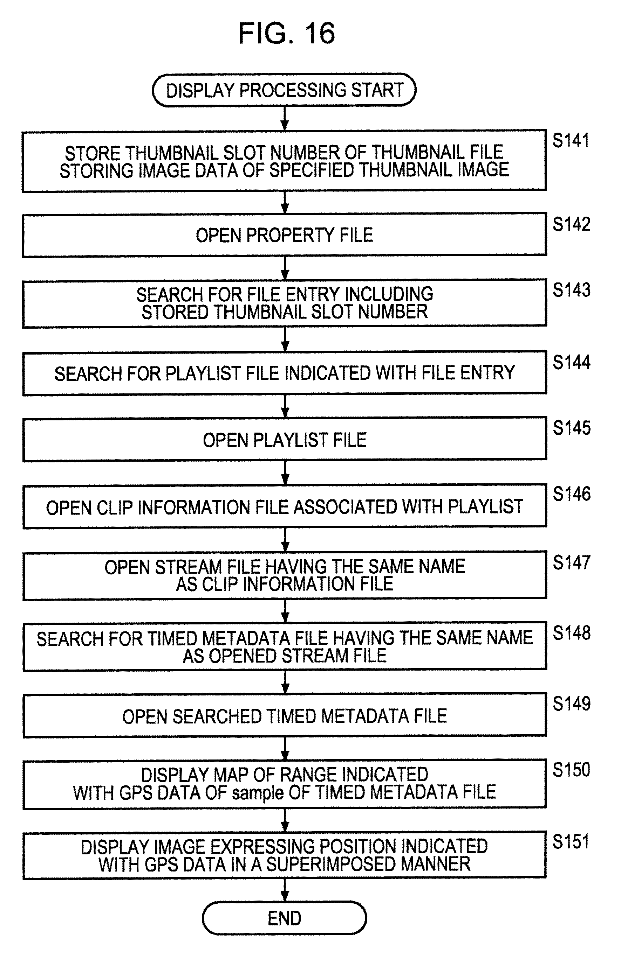

Fig. 16 is a flowchart describing another example of the display processing which is executed in the case of one of the thumbnail images in Fig. 12 being specified. Steps S141 through S143 are the same as steps S101 through S103 in Fig. 13 respectively, so description thereof will be omitted.

In step S144, the searching unit 141 searches the playlist file which is a file storing the playlist, indicated with the searched file entry. In step S145, the content file playing control unit 145 opens the searched playlist file. In step S146, the content file playing control unit 145 opens the clip information file which is a file storing the image management information, correlated with the playlist. In step S147, the content file playing control unit 145 opens the stream file having the same name excluding the extension as the name of the clip information file.

Steps S148 through S151 are the same as steps S105 through S108 in Fig. 13 respectively, so description thereof will be omitted.

Thus, even in the case of a content being made of a stream, a playlist, and image management information, an image can be displayed wherein an image representing the position indicated with GPS data which is metadata and the map are superimposed.

Next, description will be made regarding an example of playing processing of a content which is a moving image employing the timed metadata file storing timed metadata which is the JPEG data of the frame for each predetermined time, of the frames of a moving image being captured.

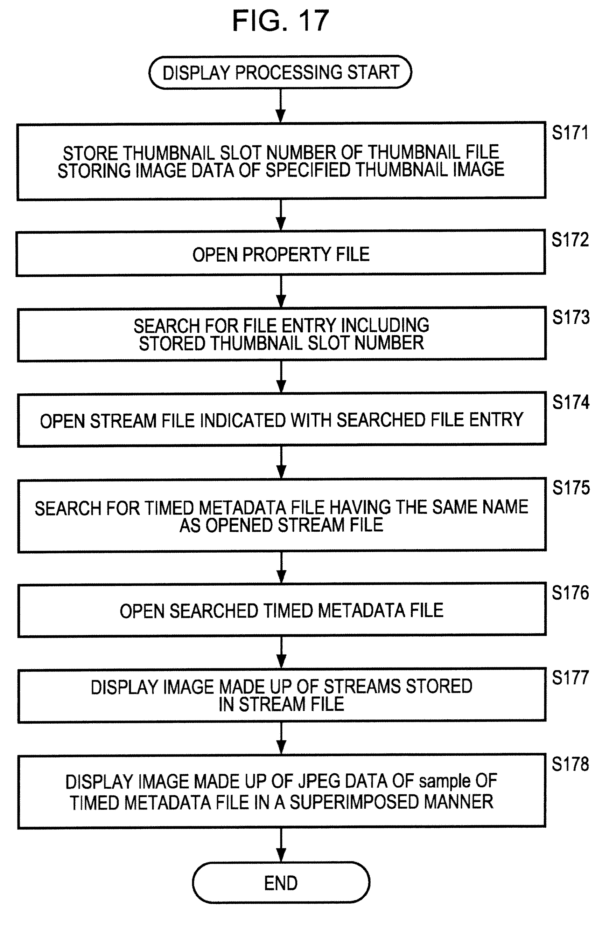

Fig. 17 is a flowchart describing yet another example of the display processing which is executed in the case of one of the thumbnail images in Fig. 12 being specified. Steps S171 through S176 are the same as steps S101 through S106 in Fig. 13 respectively, so description thereof will be omitted.

In step S177, the display control unit 103 causes the LCD 39 to display an image made up of a stream stored in the stream file. That is to say, the content file playing control unit 145 plays the stream stored in the stream file, and the display control unit 103 causes the LCD 39 to display the image made up of the played stream.

In step S178, the display control unit 103 causes the LCD 39 to superimpose the image made up of the JPEG data of the sample of the opened timed metadata file on the image of the stream to display the superimposed images, and the processing ends.

That is to say, the sample playing control unit 151 reads out and plays the JPEG data which is the data of the frame for each predetermined time, of the frames of a moving image, stored in the sample of the opened timed metadata file, and supplies this to the display control unit 103. The display control unit 103 arrays the image made up of the JPEG data in a time-sequence manner, and also causes the LCD 39 to superimpose that image on the image of the stream to display the superimposed images.

For example, the display control unit 103 causes the LCD 39 to display the image of the JPEG data equivalent to the frame for each predetermined time, such as the interval of GOP, 1-second interval, 5-second interval, or the like.

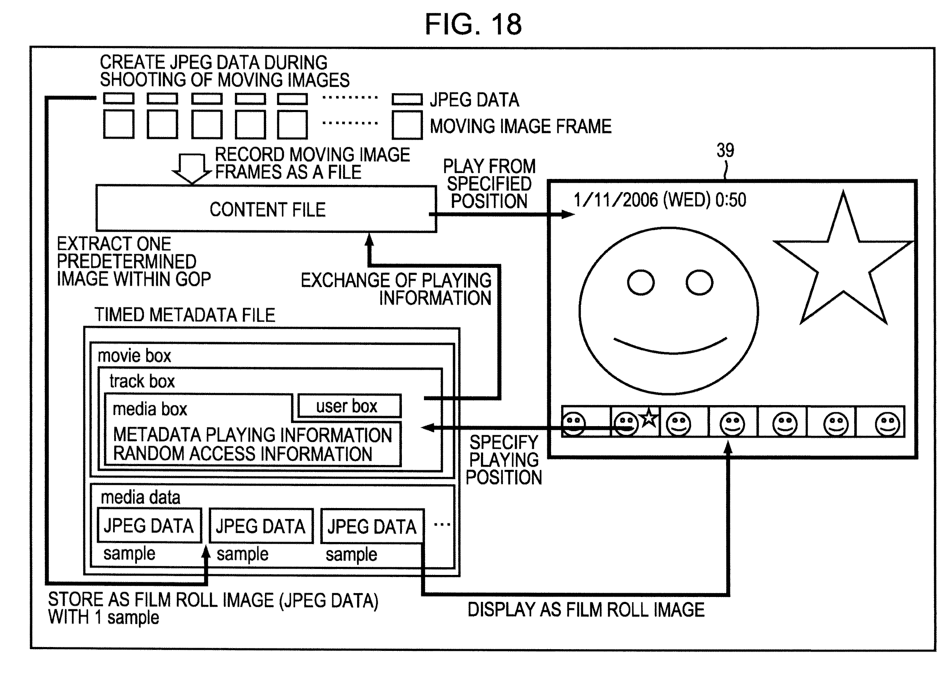

Upon the display processing shown in the flowchart in Fig. 17 being executed, for example, as shown in Fig. 18, an image wherein the image of the frame for each predetermined time indicated with the JPEG data which is metadata, and the image of the stream are superimposed is displayed on the LCD 39.

With the example of the image displayed on the LCD 39, shown at the right side of Fig. 18, seven images disposed at the lower portion of the image thereof are each made up of the image of the frame for each predetermined time indicated with JPEG data which is metadata. The image of the frame for each predetermined time indicated with JPEG data which is metadata is displayed as a so-called film roll.

For example, the JPEG data which is metadata is generated by the data of one frame extracted from each GOP at the interval of GOP, of the frames of a moving image being encoded with JPEG.

Also, the method for generating the JPEG data which is metadata is not restricted to the above-mentioned method, the JPEG data which is metadata may be generated by the data of the frame at a desired interval, e.g., at 1-second interval being encoded with JPEG. Further, an arrangement may be made wherein with the frames of a moving image, the size of the image is reduced by thinning out the pixels, or the like, which is encoded with JPEG, thereby generating JPEG data which is metadata.

Subsequently, the image of the frame for each predetermined time indicated with the JPEG data is specified, whereby the stream of the moving image can be played from the frame thereof.

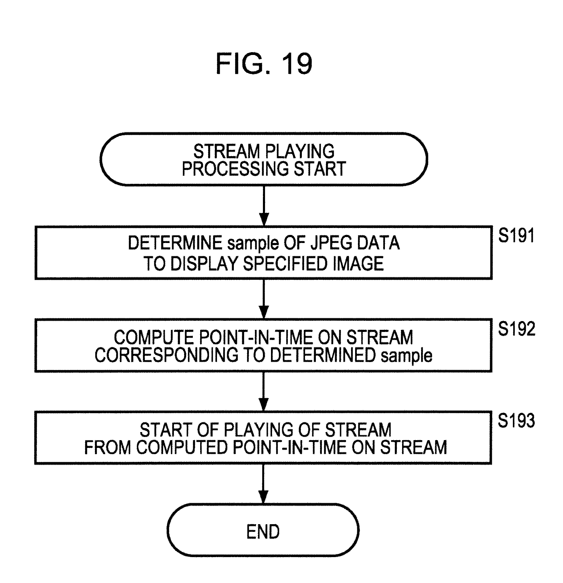

Fig. 19 is a flowchart describing another example of the stream playing processing. In step S191, the sample determining unit 153 of the timed metadata file playing control unit 146 acquires the signal from the operating unit 37 corresponding to the operation of the user specifying the image of the frame for each predetermined time, which is the image indicated with the JPEG data, displayed on the LCD 39, and determines the sample of the JPEG data wherein the specified image is displayed.

For example, upon an image representing the position indicated with GPS data being displayed on the LCD 39, the sample determining unit 153 generates a table indicating the correspondence between the position on the screen of the LCD 39 which is the position of the image indicated with JPEG data, and a number for determining a sample storing metadata which is the JPEG data. Upon a signal indicating the position on the screen specified by the user being supplied from the operating unit 37 which is a touch panel provided on the LCD 39, the sample determining unit 153 extracts the number determining the sample corresponding to the position on the screen indicated with the signal thereof from the table, thereby determining the sample of the JPEG data wherein the specified image is displayed.

Steps S192 and S193 are the same as steps S122 and S123 in Fig. 15 respectively, so description thereof will be omitted.

Thus, a moving image can be displayed from a desired frame.

Next, description will be made regarding playing processing of a desired content, of multiple contents, by employing multiple timed metadata files.

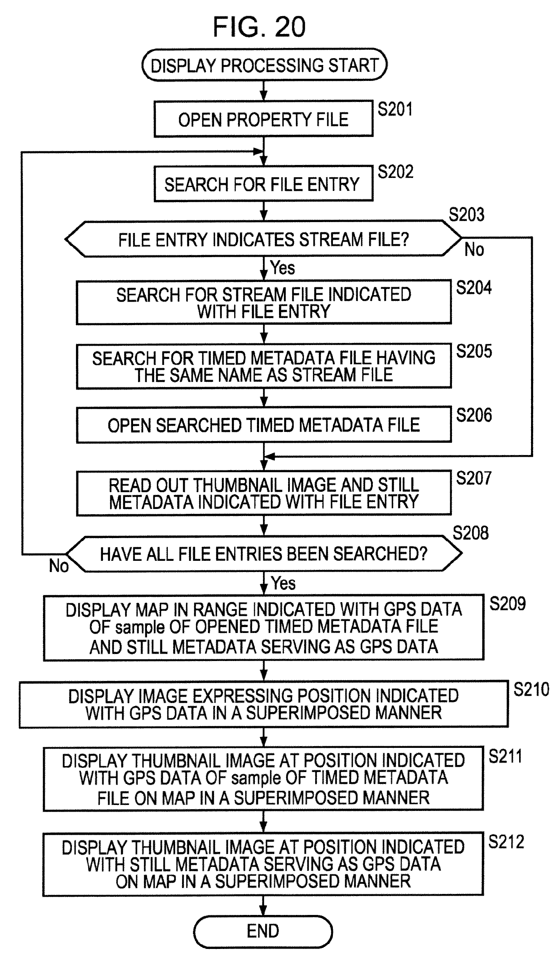

Fig. 20 is a flowchart describing yet another example of the display processing. In step S201, the property file playing control unit 142 opens the property file.

In step S202, the searching unit 141 searches a file entry included in the opened property file. In step S203, the playing control unit 102 determines regarding whether or not the searched file entry is a stream file based on the information stored in the searched file entry.

In step S203, in the case of determining that the file entry indicates a stream file, the timed meta data file corresponding to the stream file is recorded, so the processing proceeds to step S204, where the searching unit 141 searches the stream file indicated with the file entry. In step S205, the searching unit 141 searches the timed metadata file having the same name excluding the extension as the name of the searched stream file.

In step S206, the timed metadata file playing control unit 146 opens the searched timed metadata file, and the processing proceeds to step S207.

On the other hand, in the event that determination is made in step S203 that the file entry does not indicate a stream file, the file indicated with the file entry thereof is a still image file, and the timed metadata file corresponding to a still image file is not recorded, so step S204 through step S206 are skipped, and the processing proceeds to step S207.

In step S207, the thumbnail file playing control unit 143 reads out the thumbnail image indicated with the file entry. That is to say, the thumbnail file playing control unit 143 plays the image data of the thumbnail image stored in the thumbnail slot indicated with the file entry. Also, in step S207, the metadata file playing control unit 144 reads out the still metadata indicated with the file entry. That is to say, the metadata file playing control unit 144 plays the still metadata stored in the metadata slot indicated with the file entry.

In step S208, the playing control unit 102 determines regarding whether or not all of the file entries included in the opened property file have been searched, and in the case of determining that all of the file entries included in the opened property file have not been searched, the processing returns to step S202, where the above-mentioned processing is repeated regarding the next file entry.

In the case of determining in step S208 that all of the file entries included in the opened property file have been searched, the processing proceeds to step S209, where the display control unit 103 causes the LCD 39 to display the map of the range indicated with the GPS data of the sample of the opened timed metadata file and the still metadata which is GPS data.

That is to say, the sample playing control unit 151 of the timed metadata file playing control unit 146 reads out the GPS data, which is metadata indicating a position, stored in the sample of the opened timed motadata file, plays this, and supplies this to the display control unit 103. Also, the metadata file playing control unit 144 supplies, of the still metadata read out in step S207, the still metadata which is GPS data to the display control unit 103.

Subsequently, the display control unit 103 causes the LCD 39 to display the map of the range indicated with the GPS data supplied from the playing control unit 102.

In step S210, the display control unit 103 causes the LCD 39 to superimpose the image representing the position indicated with the GPS data on the image of the map to display the superimposed images. That is to say, the display control unit 103 causes the LCD 39 to superimpose the image representing the position indicated with the GPS data on the image of the map to display the superimposed images so as to dispose the image representing the position indicated with the GPS data at the position indicated with the GPS data on the map.

In step S211, the display control unit 103 causes the thumbnail image to be superimposed and displayed at the position indicated with the GPS data of the sample of the timed metadata file on the map. That is to say, the thumbnail file playing control unit 143 reads out the image data of the thumbnail image from the thumbnail file, supplies this to the display control unit 103, and the display control unit 103 causes the thumbnail image to be superimposed and displayed based on the supplied image data.

In this case, the thumbnail image is read out from the thumbnail file related to the content file having the same name as the name of the timed metadata file storing the GPS data indicating a position on the map.

That is to say, a position regarding a predetermined content is shown on the map, and also the thumbnail image thereof is displayed.

In step S212, the display control unit 103 causes the thumbnail image to be superimposed and displayed at the position indicated with the still metadata which is GPS data, on the map, and the processing ends.

In this case, the thumbnail image is read out from the thumbnail file related to the content file related to the metadata file storing the still metadata which is GPS data indicating a position on the map.

That is to say, in this case as well, a position regarding a predetermined content is shown on the map, and also the thumbnail image thereof is displayed.

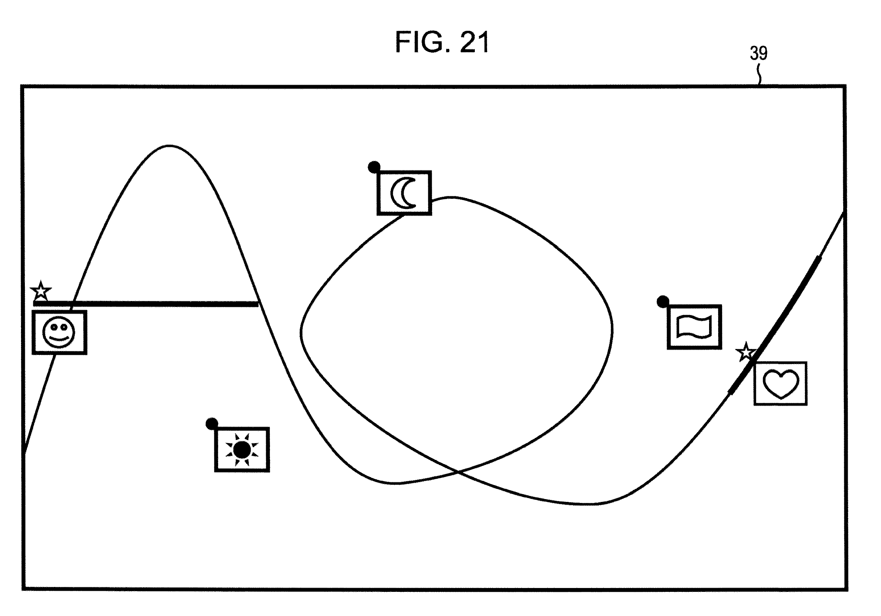

As described above, for example, as shown in Fig. 21, positions regarding multiple contents which are still images or moving images are displayed on the map, and also the thumbnail images thereof are displayed.

With the example of the image to be displayed on the LCD 39, shown in Fig. 21, an upward-sloping thick line and a horizontal thick line are images representing the shooting positions indicated with the GPS data of the timed metadata file recorded along with capturing of a moving image. Also, filled circles are images representing the shooting positions indicated with the still metadata which is the GPS data recorded along with capturing of still images.

With the example of the image to be displayed on the LCD 39, shown in Fig. 21, squares appended to star marks and filled circles indicate thumbnail images which are representative images of moving images or still images, and particularly, squares appended to star marks indicate the thumbnail images of moving images at the position and point-in-time wherein the moving images were captured. For example, a star mark in the middle of the thick line represents a resumed point of the content of the corresponding moving image, i.e., a position on the moving image played and stopped last time. A resumed point is stored in the corresponding file entry as positional information.

Subsequently, the position displayed on the map is specified, whereby the stream of the moving image can be played from the portion recorded at the position thereof. Also, the thumbnail image is specified, whereby the moving image or still image can be played.

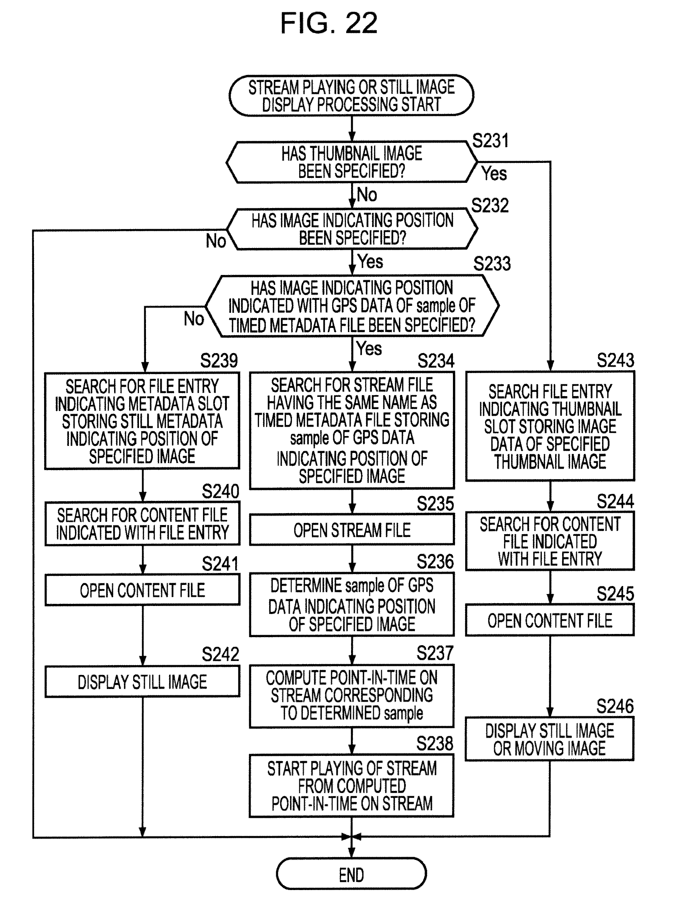

Fig. 22 is a flowchart describing stream playing or still image display processing which is executed by a position displayed on the map being specified, or by a thumbnail image being specified. In step S231, the playing control unit 102 determines whether or not a thumbnail image has been specified, and in the case of determination being made that a thumbnail image has not been specified, the processing proceeds to step S232, where determination is made whether or not an image indicating a position has been specified.

In the case of determination being made in step S232 that an image indicating a position has been specified, the processing proceeds to step S233, where the playing control unit 102 determines regarding whether or not an image indicating the position indicated with the GPS data of the sample of the timed metadata file has been specified. In the case of determination being made in step S233 that an image indicating the position indicated with the GPS data of the sample of the timed metadata file has been specified, the processing proceeds to step S234, where the searching unit 141 searches the stream file having the same name as the name of the timed metadata file storing the sample of GPS data indicating the position of the specified image.

In step S235, the content file playing control unit 145 opens the searched stream file. In step S236, the sample determining unit 153 of the timed metadata file playing control unit 146 determines the sample of the GPS data specifying the position of the image specified based on the signal from the operating unit 37 corresponding to the operation of the user specifying a position, with the same processing as the processing in step S121.

In step S237, the point-in-time computing unit 154 of the timed metadata file playing control unit 146 computes point-in-time relating to the stream corresponding to the determined sample, with the same processing as the processing in step S122.

In step S238, the content file playing control unit 145 starts playing of the stream stored in the content file from point-in-time relating to the computed stream, and the processing ends. The display control unit 103 causes the LCD 39 to display the moving image from the portion captured at the position on the map specified on the screen.

Also, in the case of determination being made in step S233 that an image indicating the position indicated with the GPS data of the sample of the timed metadata file has not been specified, the image indicating the position indicated with the still metadata which is GPS data has been specified, so the processing proceeds to step S239, where the searching unit 141 searches the file entry indicating the metadata slot storing the still metadata indicating the position of the image specified, from the property file.

In step S240, the searching unit 141 searches the still image file storing the image data of the still image, which is the content file indicated with the searched file entry. In step S241, the content file playing control unit 145 opens the still image file which is the searched content file, and plays the image data of the still image stored therein. The content file playing control unit 145 supplies the played image data to the display control unit 103.

In step S242, the display control unit 103 causes the LCD 39 to display the still image, and the processing ends.

On the other hand, in the case of determination being made in step S231 that thumbnail image has been specified, the processing proceeds to step S243, where the searching unit 141 searches the file entry indicating the thumbnail slot storing the image data of the specified thumbnail image.

In step S244, the searching unit 141 searches the content file storing the image data of the still image or the stream of the moving image, which is the content file indicated with the searched file entry, i.e., searches the stream file or still image file. In step S245, the content file playing control unit 145 opens the searched content file, and plays the image data of the stored still image, or plays the image data of the moving image which is the stored stream. The content file playing control unit 145 supplies the played image data to the display control unit 103.

In step S242, the display control unit 103 causes the LCD 39 to display the still image or moving image, and the processing ends.

In the case of determination being made in step S232 that an image indicating a position has not been specified, neither the thumbnail image nor the image indicating a position have been specified, so the processing ends as is.

Thus, in the case of a position displayed on the map being specified, the stream of the moving image is played form the portion recorded at the position thereof, or in the case of a thumbnail being specified, the corresponding moving image or still image is played.

As described above, even with utilizing of meta data in different content modes such as a moving image and a still image, a desired content can be played more rapidly under the control of centralized management using content management files. Also, a desired content can be played from a desired time point more rapidly with simple operations.

Next, description will be made regarding the details of recording a moving image content to a playlist file, clip information file, and stream file, and the details of playing of a moving content recorded in a playlist file, clip information file, and stream file.

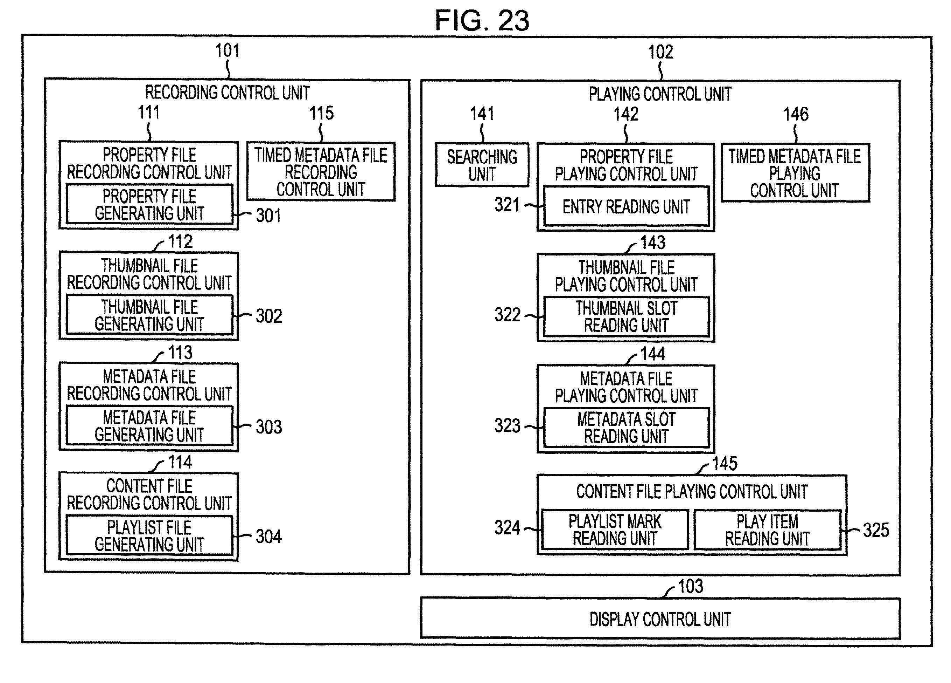

Fig. 23 is a block diagram illustrating an example of more detailed functions realized by the CPU 81 for executing the program. The components similar to those shown in Fig. 3 are denoted with the same reference numerals, and description thereof will be omitted.

The property file recording control unit 111 is configured so as to include a property file generating unit 301. The property file generating unit 301 generates a property file. That is to say, the property file generating unit 301 generates a content management file including first entry information having the attribute information of a moving image content for each piece of playing management information indicating a playing range serving as one recording unit, and second entry information having reference information to a management file.

Now, though the details will be described later, a playlist mark stored in a playlist file is an example of playing management information, and a mark entry disposed in a property file is an example of the first entry information. Also, a playlist file is an example of a management file, and a file identifier is an example of reference information to a management file.

The thumbnail recording control unit 112 is configured so as to include a thumbnail file generating unit 302. The thumbnail file generating unit 302 generates a thumbnail file. That is to say, the thumbnail file generating unit 302 generates a representative image file having image entry information including the representative image information of a moving image content for each piece of playing management information.

The metadata file recording control unit 113 is configured so as to include a metadata file generating unit 303. The metadata file generating unit 303 generates a metadata file. That is to say, the metadata file generating unit 303 generates a metadata file having metadata entry information including metadata accompanied with a moving image content for each piece of playing management information.

The content file recording control unit 114 is configured so as to include a playlist file generating unit 304. The playlist file generating unit 304 generates a playlist file. That is to say, the playlist file generating unit 304 generates a management file wherein the playing management information of a singular or multiple moving image contents is recorded for each moving image content.

Also, the property file playing control unit 142 is configured so as to include an entry reading unit 321. The entry reading unit 321 reads out an entry from the property file. In more detail, from a content management file including first entry information recording a second identifier for identifying second entry information having reference information to a management file recording playing management information for each moving image content, which is first entry information identified with a first identifier, having the attribute information of a moving image content for each piece of playing management information indicating a playing range serving as one recording unit, of a singular or multiple moving image contents, and second entry information recording the first identifier for identifying the first entry information in accordance with the recording order of playing management information recorded in the management file, the entry reading unit 321 reads out the first entry information and second entry information.

Now, description will be made in detail regarding a property file.

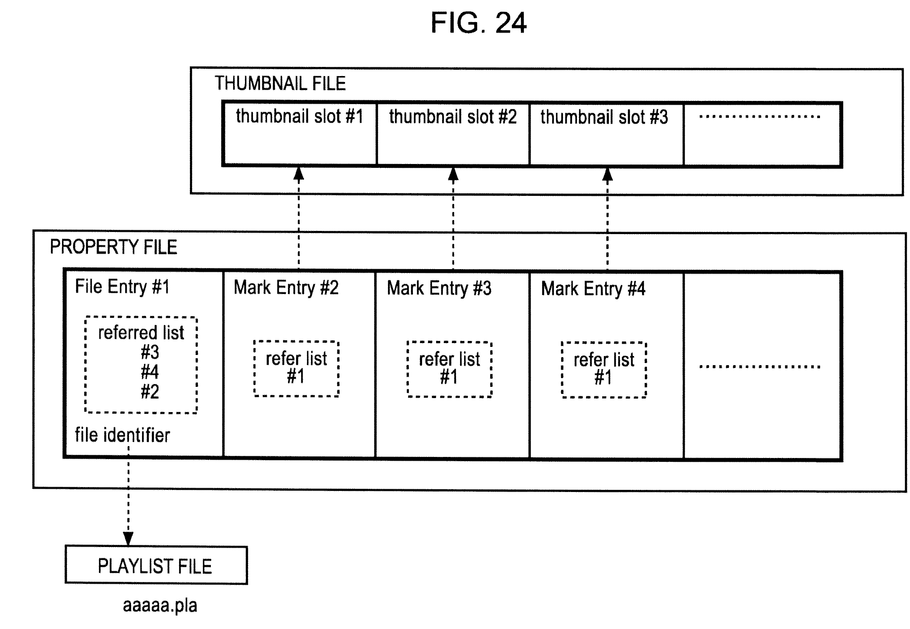

Fig. 24 is a diagram describing an example of the details of a property file. As described with reference to Fig. 4, one property file header and a singular or multiple file entries are disposed in a property file. Also, as shown in Fig. 24, a predetermined number of mark entries are disposed in a property file. Note that in Fig. 24, illustration of a property header is omitted.

Each mark entry indicates the attribute of one moving image content stored in a playlist file, clip information file, and stream file. For example, a moving image content of which the attribute is indicated with a mark entry is also referred to as a mark, which corresponds to a so-called shot from start of shooting being specified to end of shooting thereof being specified by the operating unit 37 being operated by the user.

A mark, which is the unit of a moving image content, is managed with a playlist file without being stored in an individual file such as a mark file.

With a property file (content management file), in the same way as with a file entry as to a file storing a content which is a moving image, encoded with MPEG4, a mark entry is assigned to each mark.

That is to say, a mark entry is an example of entry information having the attribute information of a moving image content for each piece of playing management information.

Data for reading out a thumbnail file or metadata file, and so forth are disposed in a mark entry, with a property slot as a unit. That is to say, one mark entry is stored in a singular or multiple property slots.

In more detail, a mark entry is disposed with information indicating that the content managed with this mark entry is a moving image, creation time (i.e., information indicating the creation date and time of a content which is a moving image), a flag indicating regarding whether or not the content which is a moving image is read only (i.e., editing or rewriting is restricted), a thumbnail slot index or a metadata slot index, and so forth. Information indicating that the content is a moving image, creation time, a flag indicating whether or not the content which is a moving image is read only, a thumbnail slot index or a metadata slot index are examples of the attribute information included in a mark entry.

Note however, a mark is not restricted to be stored in an individual file, so a file identifier is not disposed in a mark entry.

Now, a mark entry is distinguished with physical recording order within the property file of the primary slot, of property slots making up a mark entry. That is to say, a mark entry is distinguished with a number.

For example, with the example shown in Fig. 24, the number of a file entry first disposed in a property file is set to be first (#1), and the number of a mark entry to be disposed after the first file entry is set to be second (#2). Also, the number of a mark entry after the second mark entry is set to be third (#3), and the number of a mark entry after the third mark entry is set to be fourth (#4).

That is to say, with the example shown in Fig. 24, the first file entry through fourth mark entry are each stored in one property slot.

A thumbnail slot index indicating that the number of the thumbnail slot storing the image data of the thumbnail image of a moving image content indicated with the second mark entry is the first (#1) is disposed in the second mark entry. A thumbnail slot index indicating that the number of the thumbnail slot storing the image data of the thumbnail image of a moving image content indicated with the third mark entry is the second (#2) is disposed in the third mark entry. Also, a thumbnail slot index indicating that the number of the thumbnail slot storing the image data of the thumbnail image of a moving image content indicated with the fourth mark entry is the third (#3) is disposed in the fourth mark entry.

Also, a file identifier indicating the path with the recording medium 35, of the playlist file storing the playlist for managing playing of a moving image content is disposed in the first file entry.

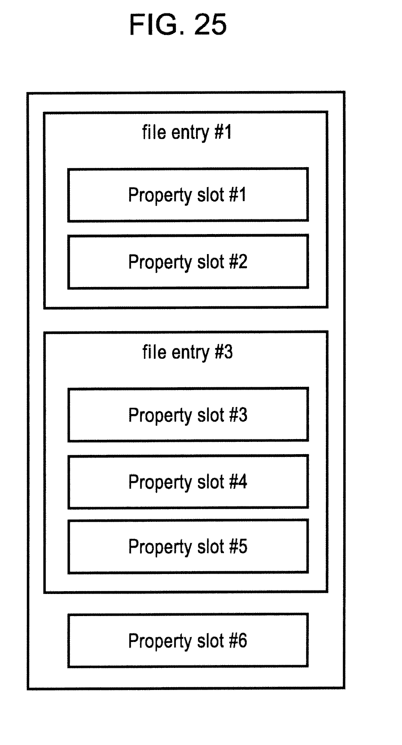

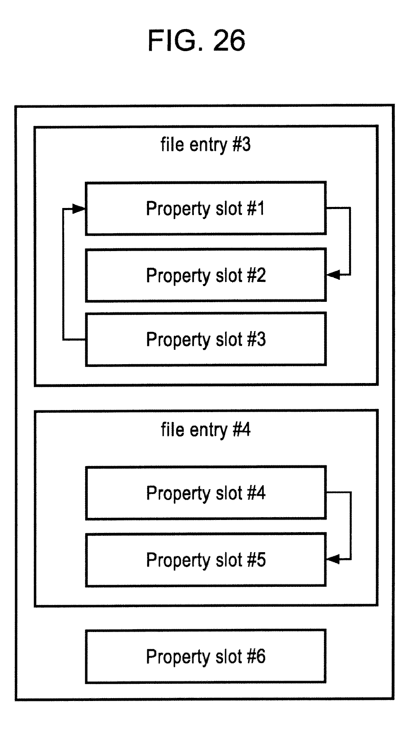

Now, description will be made regarding the numbers of file entries and mark entries with reference to Fig. 25 and Fig. 26. File entries are distinguished with physical recording order within the property file of the primary slot of property slots making up a file entry, i.e., distinguished with numbers. For example, as shown in Fig. 25, in the case of a file entry being made up of the first (#1) property slot and second (#2) property slot, and the next extend slot number of the first property slot being set to be the second, the first property slot is the primary slot, so the number of the file entry made up of the first property slot and second property slot is set to be the first (#1).

Also, for example, in the case of a file entry being made up of the third (#3) property slot, fourth (#4) property slot, and fifth (#5) property slot, the next extend slot number of the third property slot being set to be the fourth, and the next extend slot number of the fourth property slot being set to be the fifth, the third property slot is the primary slot, so the number of the file entry made up of the third property slot, fourth property slot, and fifth property slot is set to be the third (#3).

For example, as shown in Fig. 26, in the case of a file entry being made up of the first (#1) property slot, second (#2) property slot, and third (#3) property slot, the next extend slot number of the third property slot being set to be the first, and the next extend slot number of the first property slot being set to be the second, the third property slot is the primary slot, so the number of the file entry made up of the first property slot, second property slot, and third property slot is set to be the third (#3).

Also, for example, in the case of a file entry being made up of the fourth (#4) property slot and fifth (#5) property slot, and the next extend slot number of the fourth property slot being set to be the fifth, the fourth property slot is the primary slot, so the number of the file entry thereof is set to be the fourth (#4).

Note that the number of a mark entry is determined in the same way as with the number of a file entry.

Also, the slots other than the primary slot are referred to as secondary slots. Information regarding whether the slot is the primary slot or a secondary slot is recorded as the identifier of each slot.

Now, description will be returned to Fig. 24, where a reference list (refer list) for referencing a file entry is disposed in a mark entry. With the reference list of a mark entry, physical recording order within the property file of a playlist file storing a moving image content of which the attribute is indicated with the mark entry thereof, a clip information file, and a file entry for referencing a stream file, i.e., the numbers thereof are stored.

With the example shown in Fig. 24, a reference list storing the first that is the number of a file entry is disposed in the second mark entry. Also, a reference list storing the first that is the number of a file entry is disposed in each of the third mark entry and fourth mark entry.

Further, a referred list indicating the order of playlist files, of the playlist mark of one moving image content of which the attribute is indicated with the referenced mark entry, is disposed in a file entry.

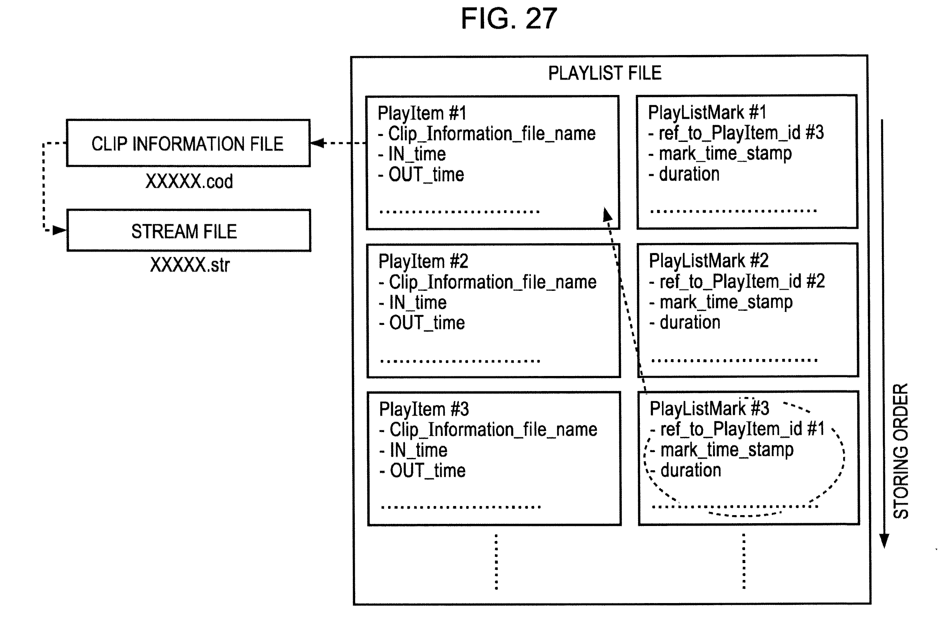

Fig. 27 is a diagram describing the configuration of a playlist file. A playlist file stores a play item and playlist mark.

A play item is configured of information for determining one clip information file, information for determining the IN point and OUT point of moving image data stored in the stream file having the same name as the name of the clip information file determined with that information, and so forth.

For example, a play item #1, play item #2, play item #3, and so on are stored in the playlist file shown in Fig. 27 in order of the play item #1, play item #2, play item #3, and so on. Each of the play item #1, play item #2, and play item #3 is configured of Clip_Information_file_name describing the name and path of one clip information file, IN_time describing an IN point which is start point-in-time of playing of moving image data with point-in-time relating to a moving image as a reference, OUT_time describing an OUT point which is end point-in-time of playing of moving image data with point-in-time relating to a moving image as a reference, and so forth.

A playlist mark is originally information to display a chapter. Specifically, a playlist mark is configured of information for determining a play item to be referenced, information for determining start point-in-time of playing of a moving image content, and (the length of (chapter interval)) the time of a moving image content with the IN point and OUT point of the moving image data determined with the play item to be referenced as references, and so forth. That is to say, a playlist mark is information indicating the playing range of moving image data stored in a stream file, and is an example of the playing management information of a moving image content.

For example, a playlist mark #1, playlist mark #2, playlist mark #3, and so on are stored in the playlist file shown in Fig. 27 in order of the playlist mark #1, playlist mark #2, playlist mark #3, and so on. The playlist mark #1 is configured of ref_to_Playltem_id #3 determining the play item #3, mark_time_stamp indicating the start point-in-time of playing of a moving image content, and duration indicating the length of time of a moving image content, with the IN point of moving image data determined by the referenced play item #3 as a reference, and so forth.

The playlist mark #2 is configured of ref_to_Playltem_id #2 determining the play item #2, mark_time_stamp indicating the start point-in-time of playing of a moving image content, and duration indicating the length of time of a moving image content, with the IN point of moving image data determined by the referenced play item #2 as a reference, and so forth. Further, the playlist mark #3 is configured of ref_to_Playltem_id #1 determining the play item #1, mark_time_stamp indicating the start point-in-time of playing of a moving image content, and duration indicating the length of time of a moving image content, with the IN point of moving image data determined by the referenced play item #1 as a reference, and so forth.

That is to say, the playlist mark is determined, whereby the stream file storing a moving image content and the start position and end position of a moving image content are determined.

For example, in the case of the playlist mark #3 being determined as playing management information, the play item #1 is referenced by the playlist mark #3, and one clip information file is referenced by the play item #1.

A clip information file stores the image management information of the stream file having the same name as the name thereof, so the stream file storing a moving image content can be determined from the name of the clip information file.

Thus, upon the playlist mark being determined, the clip information file and stream file are determined.

Further, the start position and end position of playing of a moving image content are determined from information determining the IN point and OUT point of the moving image data stored in a stream file, which makes up a play item, and information determining the start point-in-time of playing of a moving image content and the time of a moving image content, which makes up a playlist mark.

Accordingly, upon the playlist mark of a playlist file being determined, playing of a moving image content can be performed.

A referred list indicating the order of playlist files, of such a playlist mark is disposed in a file entry.

Description will be returned to Fig. 24, where the referred list disposed in the first file entry stores the numbers of mark entries in order of the third (#3), fourth (#4), and second (#2).

Accordingly, the number of the third mark entry is stored first in the referred list, so the playlist mark of one moving image content of which the attribute is indicated with the third mark entry is stored first in the playlist file. The number of the fourth mark entry is stored at the second of the referred list, so the playlist mark of one moving image content of which the attribute is indicated with the fourth mark entry is stored at the second of the playlist file. Similarly, the number of the second mark entry is stored at the third of the referred list, so the playlist mark of one moving image content of which the attribute is indicated with the second mark entry is stored at the third of the playlist file.

Hereafter, the number of a file entry will be referred to as a file entry number, and the number of a mark entry will be referred to as a mark entry number. Also, hereafter, the number of a slot will be referred to as a slot number.

Description will be returned to Fig. 23, where the thumbnail file playing control unit 143 is configured so as to include a thumbnail slot reading unit 322. The thumbnail slot reading unit 322 reads out a thumbnail slot from the thumbnail file. That is to say, the thumbnail slot reading unit 322 reads out image entry information from a representative image file having image entry information including representative image information of a moving image content for each piece of playing management information.

The metadata file playing control unit 144 is configured so as to include a metadata slot reading unit 323. The metadata slot reading unit 323 reads out a metadata slot from the metadata file. That is to say, the metadata slot reading unit 323 reads out metadata entry information from the metadata file having metadata entry information including metadata accompanied with a moving image content for each piece of playing management information.

The content file playing control unit 145 is configured so as to include a playlist mark reading unit 324 and a play item reading unit 325. The playlist mark reading unit 324 reads out a playlist mark from the playlist file. That is to say, the playlist mark reading unit 324 reads out playing management information from the management file in accordance with the recording order of the second identifiers of the second entry information.

A play item reading unit 325 reads out a play item from the playlist file.

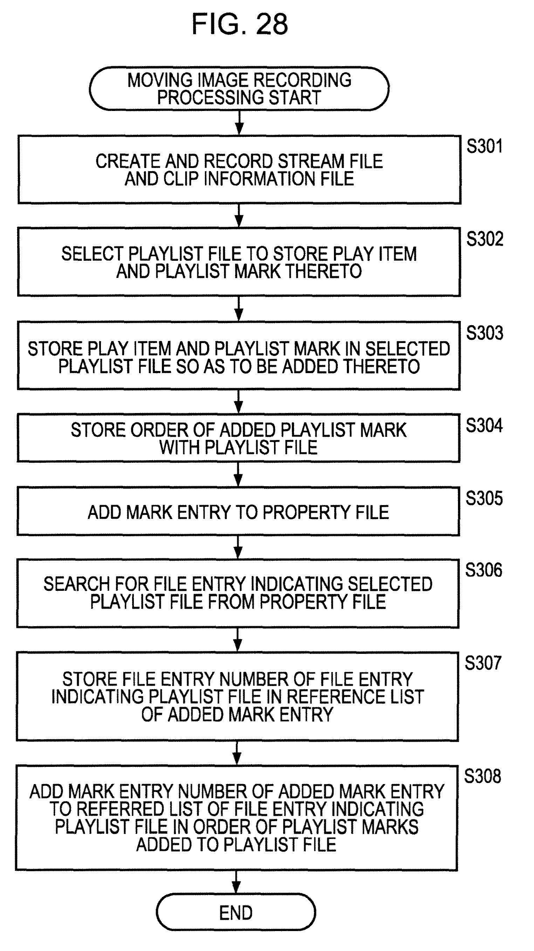

Next, an example of moving image recording processing will be described with reference to the flowchart in Fig. 28.

In step S301, the content file recording control unit 114 generates a stream file storing a moving image stream, and a clip information file storing the image management information of the moving image stream thereof, and records the generated stream file and clip information file in the recording medium 35.

In step S302, the playlist file generating unit 304 of the content file recording control unit 114 selects the playlist file for storing a play item and playlist mark.

For example, in the case of one playlist file being recorded in the recording medium 35, the playlist file generating unit 304 selects the playlist file thereof. Also, for example, the playlist file generating unit 304 selects the playlist file generated today, i.e., the playlist file having the same generated date as the date of today.

Also, for example, in the case of the power of the digital camera 11 being turned on, the playlist file generating unit 304 generates a playlist file, and in step S302, the playlist file generating unit 304 selects the playlist file generated after the power thereof was turned off last time.

Further, for example, in the case of the recording medium 35 being mounted, the playlist file generating unit 304 generates a playlist file, and in step S302, the playlist file generating unit 304 selects the playlist file generated after the recording medium 35 being detached.

Also, for example, upon a predetermined number of playlist marks being stored in a playlist file, the playlist file generating unit 304 generates a new playlist file, and in step S302, the playlist file generating unit 304 selects the playlist file in which a predetermined number of playlist marks are not stored.

Note that in the case of no playlist file being recorded in the recording medium 35, in step S302 the playlist file generating unit 304 generates a new playlist file.

In step S303, the playlist file generating unit 304 stores the play item which determines the clip information file generated in step S301, and indicates the start and end of the moving image stream stored in the stream file generated in step S301, and the playlist mark determining the play item thereof in the selected playlist file in an additional mode.

That is to say, the playlist file generating unit 304 stores a play item in the playlist file in order so as to dispose a new play item following the play items having already been stored in the selected playlist file, and stores a playlist mark in the playlist file in order so as to dispose a new playlist mark following the playlist marks having already been stored in the selected playlist file.

Note that in step S301, the content file recording control unit 114 may store a new moving image stream in the stream file already recorded following the moving image streams having already been stored in the selected playlist file. In this case, in step S303, the playlist file generating unit 304 stores a playlist mark indicating the range of the moving image stream newly stored in the stream file in the selected playlist file in an additional mode.

Thus, of a singular or multiple moving image contents, a management file in which playing management information indicating a playing range serving as one recording unit is recorded for each moving image content is generated.

In step S304, the playlist file generating unit 304 causes the RAM 82 to store the order of added playlist marks in the playlist file. For example, in the case of a new playlist mark stored in step S303 being stored as the third playlist mark of the playlist marks of the playlist file thereof, the playlist file generating unit 304 causes the RAM 82 to store the order of the added playlist mark which is the third.

In step S305, the property file generating unit 301 of the property file recording control unit 111 adds the mark entry corresponding to the moving image stream stored in the stream file to the property file.

In step S306, the property file generating unit 301 searches the file entry indicating the playlist file selected in step S302 from the property file.

In step S307, the property file generating unit 301 stores the file entry number of the file entry indicating the playlist file in the reference list of the added mark entry.

In step S308, the property file generating unit 301 adds the mark entry number of the added mark entry in the referred list of the file entry indicating the playlist file in order of the playlist marks added to the playlist file, which is stored in the RAM 82, and the processing ends.

Thus, a property file is generated, which includes a mark entry having the attribute information of a moving image content for each playlist mark, and a file entry having a file identifier indicating the path of a playlist file. With the property file, a file entry number is recorded in a mark entry, and a mark entry number is recorded in a file entry in accordance with the recording order of the playlist marks recorded in a playlist file.

In other words, a content management file is generated, which includes first entry information having the attribute information of a moving image content for each piece of playing management information, and second entry information having reference information as to a management file. With the content management file, the first identifier for identifying the second entry information is recorded in the first entry information, and the second identifier for identifying the first entry information is recorded in the second entry information in accordance with the recording order of the playing management information recorded in the management file.

Thus, upon a moving image being recorded, as shown in Fig. 24, a mark entry indicating the attribute of the recorded moving image is disposed in the property file. A reference list for referencing a file entry is disposed in the mark entry, and a referred list indicating the order with the playlist file of the playlist mark of the moving image of which the attribute is indicated with the referenced mark entry is disposed in the file entry.

According to such a file entry and mark entry, the attribute of each moving image can be read out without opening each corresponding content file, and consequently, a moving image with a desired attribute can be played more rapidly.

Next, moving image playing processing will be described.

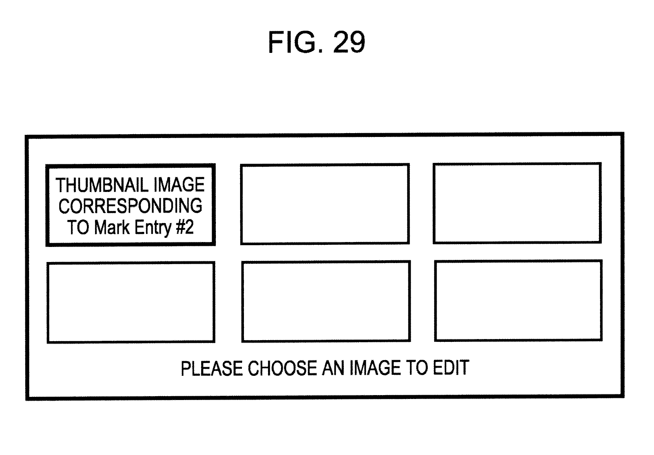

For example, in the case of playing a moving image, the thumbnail file playing control unit 143 reads out the thumbnail image stored in the thumbnail file serving as a content management file, and supplies this to the display control unit 103. In response to this, the display control unit 103 causes the LCD 39 to display, for example, as shown in Fig. 29, six thumbnail images corresponding to moving images respectively. In this case, for example, the thumbnail image corresponding to the mark entry stored in the property file is displayed on the LCD 39.

The user operates the operating unit 37, thereby specifying, of the thumbnail images displayed on the LCD 39, for example, the thumbnail image corresponding to the second mark entry.

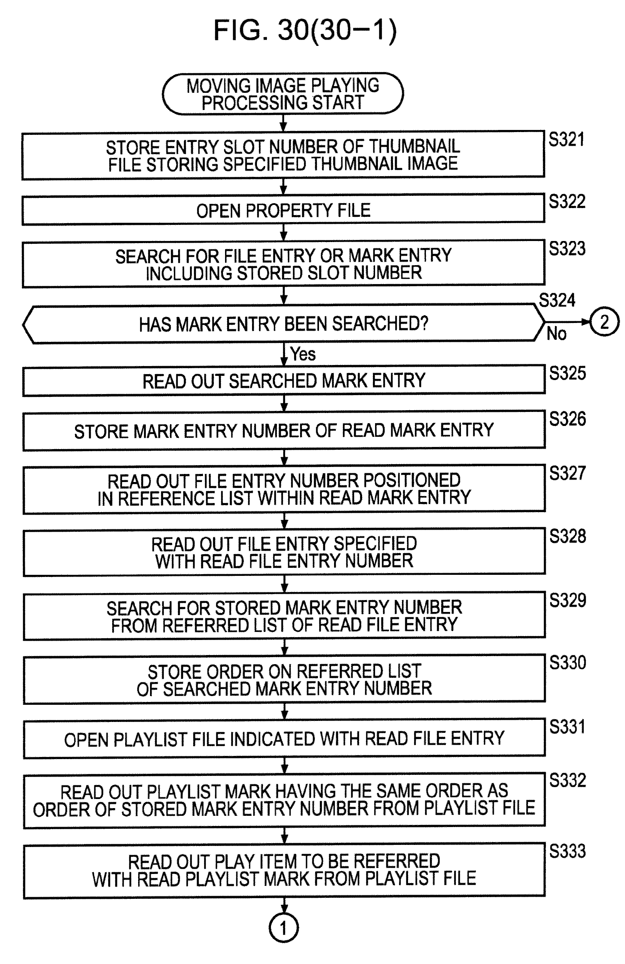

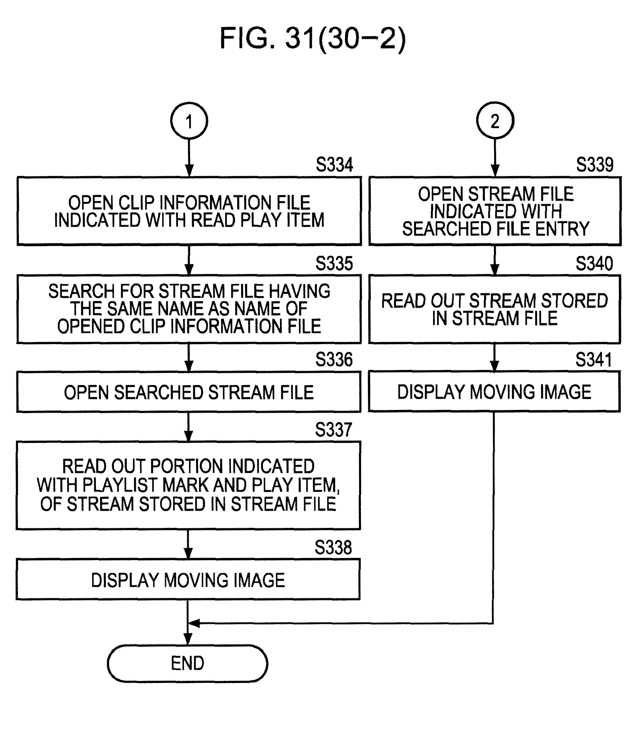

Fig. 30 and Fig. 31 are flowcharts describing an example of the moving image playing processing. In step S301, the playing control unit 102 acquires the signal from the operating unit 37 corresponding to the operation of the user for specifying one thumbnail image, and stores the slot number of the thumbnail slot of the thumbnail file storing the image data of the specified thumbnail image. For example, in step S301, the playing control unit 102 stores the slot number of the thumbnail slot which is the second.

For example, upon thumbnail images being displayed on the LCD 39, the playing control unit 102 generates a table indicating the correspondence between a number for determining the thumbnail image displayed on the LCD 39, and the slot number of the thumbnail slot storing the image data of the thumbnail image. Upon a signal indicating the number of a thumbnail image being supplied from the operating unit 37 operated by the user, the playing control unit 102 extracts the slot number of the thumbnail slot corresponding to the number of the thumbnail image indicated with the signal thereof, and stores the slot number of the thumbnail slot thereof.

In step S322, the property file playing control unit 142 opens the property file. In step S323, the searching unit 141 searches the file entry or mark entry including the slot number stored in step S321 from the opened property file.

In step S324, the searching unit 141 determines regarding whether or not the mark entry has been searched, and in the case of the mark entry having been searched, the processing proceeds to step S325.

In step S325, the entry reading unit 321 of the property file playing control unit 142 reads out the searched mark entry from the property file. That is to say, the entry reading unit 321 extracts the mark entry from the property file.

In step S326, the entry reading unit 321 stores the mark entry number of the read mark entry in the RAM 82. For example, in step S326, the entry reading unit 321 stores the mark entry number, which is the second, in the RAM 82.

In step S327, the entry reading unit 321 reads out the file entry number disposed on the reference list within the read mark entry. That is to say, the entry reading unit 321 extracts the reference list from the mark entry, and reads out the file entry number disposed on the reference list thereof. For example, the entry reading unit 321, the entry reading unit 321 reads out the file entry number which is the first from the reference list.

In step s328, the entry reading unit 321 reads out the file entry determined with the file entry number read out from the property file. That is to say, the entry reading unit 321 extracts the file entry determined with the file entry number from the property file. For example, in step S328, the entry reading unit 321 reads out the first file entry from the property file.

Thus, from a content management file including first entry information recording a second identifier for identifying second entry information having reference information to a management file recording playing management information for each moving image content, which is first entry information identified with a first identifier, having the attribute information of a moving image content for each piece of playing management information indicating a playing range serving as one recording unit, of a singular or multiple moving image contents, and second entry information recording the first identifier for identifying the first entry information in accordance with the recording order of playing management information recorded in the management file, the first entry information and second entry information are read out.

In step S329, the entry reading unit 321 searches the stored mark entry number from the referred list of the read file entry. For example, in step S329, the entry reading unit 321 searches the stored mark entry number which is the second from the referred list.

In step S330, the entry reading unit 321 stores the order on the referred list of the searched mark entry number. For example, as shown in Fig. 24, in the case of the mark entry number which is the second searched in step S329 being stored as the third mark entry number of the mark entry numbers of the referred list, the entry reading unit 321 causes the RAM 82 to store the third which is the order on the referred list of the searched make entry number.

In step S331, the content file playing control unit 145 opens the playlist file indicated with the file entry read out in step S328. That is to say, in step S331, the content file playing control unit 145 opens the playlist file indicated with the file identifier of the read file entry.

In step S332, the playlist mark reading unit 324 of the content file playing control unit 145 reads out the playlist mark having the same order as the order of the stored mark entry number from the playlist file. For example, in the case of the order of the stored mark entry number being the third, in step S332 the playlist mark reading unit 324 reads out, of the playlist marks stored in the playlist file, the third playlist mark from the playlist file.

Thus, playing management information is read out from the management file in accordance with the recording order of the second identifier of the second entry information.

In step S333, the play item reading unit 325 of the content file playing control unit 145 reads out the play item referenced with the read playlist mark from the playlist file.

For example, as shown in Fig. 27, the play item reading unit 325 reads out the first play item determined with ref_to_PlayItem_id#1 of the read third playlist mark from the playlist file.

In step S334, the content file playing control unit 145 opens the clip information file indicated with the read play item. For example, as shown in Fig. 27, the content file playing control unit 145 refers to the name and path of the clip information file described in Clip_Information_file_name of the read first play item to open the clip information file determined with the path and name thereof.

In step S335, the searching unit 141 searches the stream file having the same name as the name of the opened clip information file from the recording medium 35. In step S336, the content file playing control unit 145 opens the searched stream file. That is to say, the content file playing control unit 145 opens the stream file having the same name as the name of the clip information file opened in step S334.

In step S337, the content file playing control unit 145 reads out, of the stream stored in the stream file, the portion indicated with a playlist mark and play item from the stream file. That is to say, the content file playing control unit 145 reads out, of the stream stored in the stream file, the portion indicated with the start point-in-time of playing of a moving image content indicated with the IN point described with IN_time of the first play item, and mark_time_stamp of the third playlist mark with the IN point as a reference, and the length of time of the moving image content indicated with duration, from the stream file. The content file playing control unit 145 supplies the read stream to the display control unit 103.

In step S338, the display control unit 103 causes the LCD 39 to display the moving image based on the read stream, and the processing ends.

On the other hand, in the case of determination being made in step S324 that no mark entry having been searched, the file entry has been searched, so the processing proceeds to step S339, and the content file playing control unit 145 opens the stream file indicated with the searched file entry. That is to say, in step S339, the content file playing control unit 145 opens the stream file indicated with the file identifier of the searched file entry.

In step S340, the content file playing control unit 145 reads out the stream stored in the stream file. The content file playing control unit 145 supplies the read stream to the display control unit 103.

In step S341, the display control unit 103 causes the LCD 39 to display the moving image based on the read stream, and the processing ends.

Even in the case of a moving image content being recorded as a mark, the attribute information of the moving image content is stored in a content management file, so the attribute information of each moving image content recorded as a mark can be readily read out.

Subsequently, thus, upon a moving image content being selected based on the attribute information of each moving image content recorded as a mark, the selected moving image content can be readily played.

As described above, a moving image having a desired attribute can be played more rapidly. A desired moving image can be played rapidly with simple processing which requires no complex processing such that the range of the moving image data as to a desired moving image content is determined, and the attribute information of the moving image data of which the range is determined is read out.

As described above, the reference information as to the management file may be, for example, a file identifier or the like directly indicating the position where the management file serving as the playlist file is recorded, or may be information indirectly indicating the position where the management file is recorded, such as the folder entry number of a later-described folder entry or the like.

In such a case, no file identifier is disposed in the file entry of the property file. As described above, a file identifier indicates the position where the content file indicated with a file entry is recorded, so no file identifier is disposed in a file entry, whereby there is no need to update the property file, even in the case of the name or path of the playlist file is changed, for example. That is to say, processing across a content management file, clip information file, and stream file can be reduced more.

Hereafter, description will be made regarding the details in the case of the reference information being taken as information indirectly indicating the position where the management file is recorded.

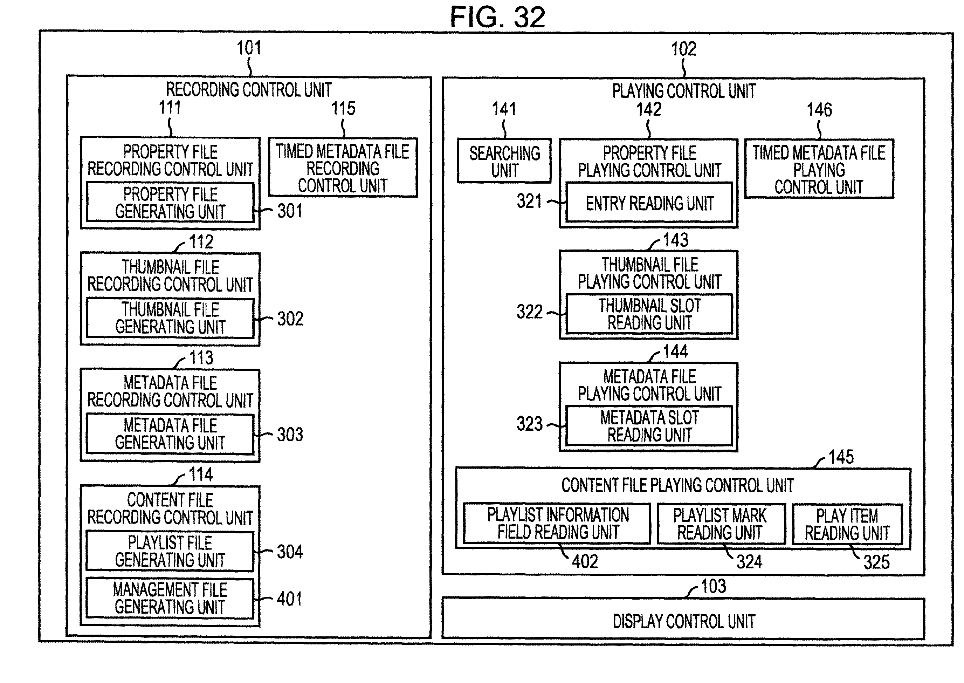

Fig. 32 is a block diagram illustrating another example of more detailed function realized by the CPU 81 for executing the program. The same components as those in the case shown in Fig. 23 are denoted with the same reference numerals, and description thereof will be omitted.

The content file recording control unit 114 is configured so as to include a playlist file generating unit 304 and a management file generating unit 401.

The management file generating unit 401 generates a management file for managing a singular or multiple playlist files. For example, a management file is described with the names of a singular or multiple playlist files disposed in the directory of MOVIE1 where the management file thereof is disposed, information relating to a menu screen to be displayed in the case of these playlist files being selected, and so forth.

The content file playing control unit 145 is configured so as to include a playlist mark reading unit 324, a play item reading unit 325, and a playlist information field reading unit 402. The playlist information field reading unit 402 reads out a playlist information field where each piece of information of a playlist file is described from the management file.

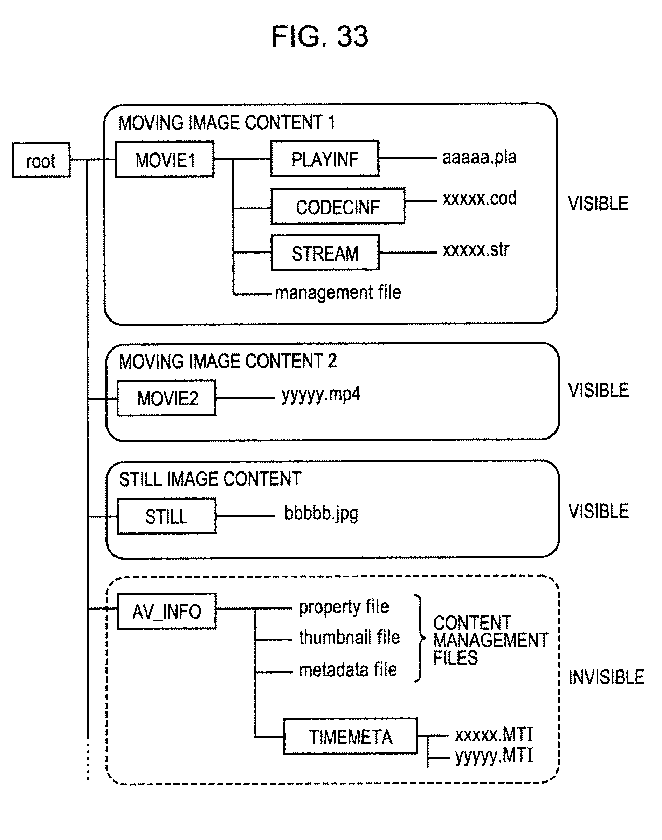

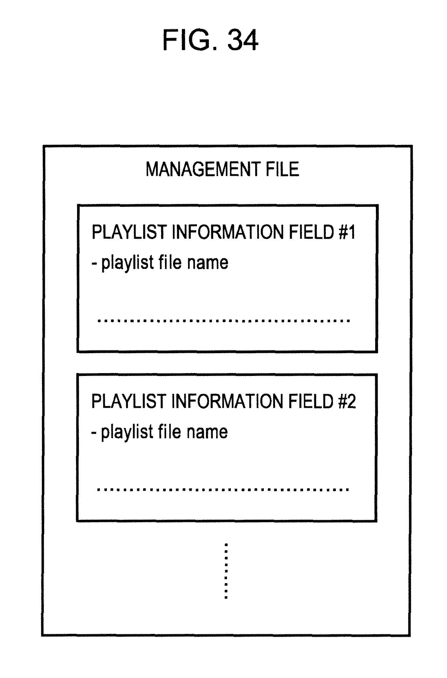

Now, description will be made regarding a management file with reference to Fig. 33 and Fig. 34.

As shown in Fig. 33, a management file is disposed in the directory of MOVIE1 along with a playlist file, clip information file, and stream file. The directory of MOVIE1 is disposed with one management file.

As shown in Fig. 34, a management file is disposed with a singular or multiple playlist information fields. Each piece of information of a playlist file disposed in the directory of MOVIE1 where the management file thereof is disposed is described in each playlist information field. For example, the name of each playlist file is described in each playlist information field.

With the example in Fig. 34, of the playlist information fields of a management file, a playlist information field #1 which is the first playlist information file is described with the name (playlist file name) of one playlist file, of the playlist files disposed in the directory of MOVIE1.

With the example in Fig. 34, of the playlist information fields of the management file, a playlist information field #2 which is the second playlist information field is described with the name (playlist file name) of one playlist file other than the playlist file of which the name is described in the playlist information field #1, of the playlist files disposed in the directory of MOVIE1.

Next, description will be made in more detail regarding the property file in the case of a management file being disposed in the directory of MOVIE1 along with a playlist file, clip information file, and stream file.

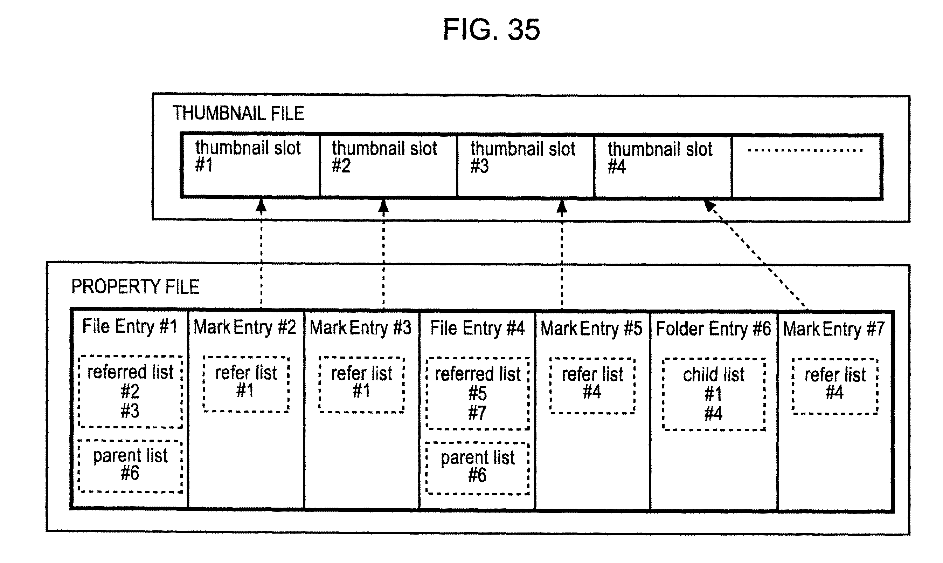

Fig. 35 is a diagram describing another example of the details of a property file.

As shown in Fig. 35, with a property file, a predetermined number of file entries and a predetermined number of mark entries are disposed, and also one folder entry is disposed. Note that in Fig. 35, illustrating of the property header thereof is omitted.

A folder entry is an example of entry information having indirect reference information as to a playlist file through a management file.

With the example shown in Fig. 35, in the case of the file entry being referenced by the mark entry, the folder entry is further referenced by the referenced file entry, and the playlist file is read out through the management file in accordance with the reference information of the folder entry.

With the folder entry, a child list serving as an example of the reference information is disposed. A child list is information for referencing a predetermined playlist information field of the management file.

As described above, each piece of information of the playlist file is described in each playlist information field, so one playlist information field is read out from the management file with reference to the child list of the folder entry, and of the information described in the read playlist information field, the playlist information is referenced with the name of the playlist file. Thus, the playlist file is referenced by the folder entry through the management file.

A folder entry is stored in a singular or multiple property slots with a property slot as a unit.

Note that the number of a folder entry is determined in the same way as with the file entry number of a file entry, and the mark entry number of a mark entry. Hereafter, the number of a folder entry will be referred to as a folder entry number.

In the case of a folder entry being disposed in a property file, a playlist file is referenced through the management file from the folder entry, so a file identifier is not disposed in the file entry disposed in the property file thereof. In this case, the file entry is disposed with a parent list for referencing the folder entry from the file entry.

With the parent list of the file entry, the folder entry number of the folder entry referenced with the file entry thereof is stored.

Describing the child list of a folder entry in more detail, the file entry number of a file entry referencing the folder entry is stored in the child list. In the case of the file entry of the file entry number thereof being referenced with a mark entry, the order of a file entry number in the child list is to be the order in the management file of a playlist information field where the information of a playlist file to be read out is described.

With the example shown in Fig. 35, the file entry number of a file entry disposed in first in a property file is set to be the first (#1), the mark entry number of a mark entry disposed next to the first file entry is set to be the second (#2), and the mark entry number of a mark entry disposed next to the second file entry is set to be the third (#3). The file entry number of the file entry disposed next to the third mark entry is set to be the fourth (#4), and the mark entry number of the mark entry disposed next to the fourth file entry is set to be the fifth (#5).

The folder entry number of the folder entry disposed next to the fifth mark entry is set to be the sixth (#6). Further, the mark entry number of the mark entry disposed next to the sixth folder entry is set to be the seventh (#7).

That is to say, with the example shown in Fig. 35, each of the first through seventh mark entries is stored in one property slot.

With the example shown in Fig. 35, with each of the first file entry and fourth file entry, a parent list storing the folder entry number which is the sixth is disposed. According to this parent list, the sixth folder entry is referenced from the first file entry and fourth file entry.

With the child list disposed in the sixth folder entry, file entry numbers are stored in order of the first (#1) and fourth (#4).

The file entry number which is the first is disposed first in the child list of the sixth folder entry, so a playlist information field describing information such as the name of the playlist file to be read out in the case of the first file entry being referenced by a mark entry is disposed first in the management file.

Also, the file entry number which is the fourth is disposed second in the child list of the sixth folder entry, so a playlist information field describing the information of the playlist file to be read out in the case of the fourth file entry being referenced by a mark entry is disposed second in the management file.

With the example shown in Fig. 35, with each of the second mark entry and third mark entry, a reference list storing the file entry number which is the first is disposed. According to this reference list, the first file entry is referenced from the second mark entry and third mark entry.

With the referred list disposed in the first file entry, mark entry numbers are stored in order of the second (#2) and third (#3).

The mark entry number which is the second is stored first in the referred list of the first file entry, so the playlist mark of one moving image content of which the attribute is indicated with the second mark entry is stored first in the playlist file where information such as a name and so forth is described with the playlist information field disposed first in the management file.

The mark entry number which is the third is stored second in the referred list of the first file entry, so the playlist mark of one moving image content of which the attribute is indicated with the third mark entry is stored second in the playlist file where information such as a name and so forth is described with the playlist information field disposed first in the management file.

Also, with the example shown in Fig. 35, with each of the fifth mark entry and seventh mark entry, a reference list storing the file entry number which is the fourth is disposed. According to this reference list, the fourth file entry is referenced from the fifth mark entry and seventh mark entry.

With the referred list disposed in the fourth file entry, mark entry numbers are stored in order of the fifth (#5) and seventh (#7).

The mark entry number which is the fifth is stored first in the referred list of the fourth file entry, so the playlist mark of one moving image content of which the attribute is indicated with the fifth mark entry is stored first in the playlist file where information such as a name and so forth is described with the playlist information field disposed second in the management file. The mark entry number which is the seventh is stored second in the referred list of the fourth file entry, so the playlist mark of one moving image content of which the attribute is indicated with the seventh mark entry is stored second in the playlist file where information such as a name and so forth is described with the playlist information field disposed second in the management file.

With the second mark entry, there is disposed a thumbnail slot index indicating the slot number which is the first (#1) of the thumbnail slot storing the image data of the thumbnail image of the moving image content indicated with the second mark entry. With the third mark entry, there is disposed a thumbnail slot index indicating the slot number which is the second (#2) of the thumbnail slot storing the image data of the thumbnail image of the moving image content indicated with the third mark entry. Also, with the fifth mark entry, there is disposed a thumbnail slot index indicating the slot number which is the third (#3 of the thumbnail slot storing the image data of the thumbnail image of the moving image content indicated with the fifth mark entry. Further, with the seventh mark entry, there is disposed a thumbnail slot index indicating the slot number which is the fourth (#4) of the thumbnail slot storing the image data of the thumbnail image of the moving image content indicated with the seventh mark entry.

Thus, it can be said that an imaginary folder where a singular or multiple playlist files are disposed is indicated with a folder entry.

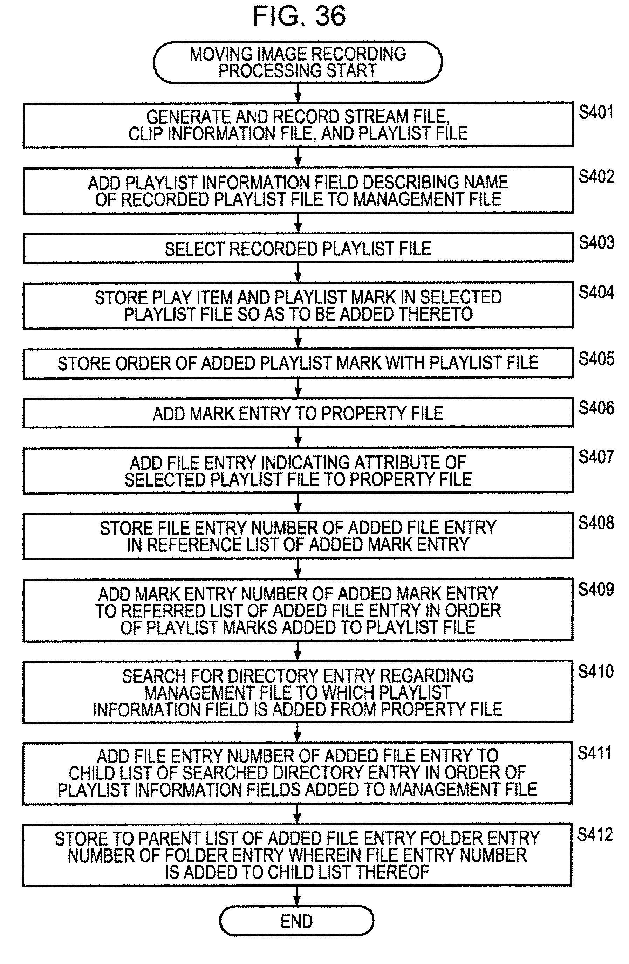

Next, another example of moving image recording processing will be described with reference to the flowchart in Fig. 36.

In step S401, the content file recording control unit 114 generates a stream file storing a moving image stream, a clip information file storing the image management information of the moving image stream thereof, and a playlist file storing a play item and playlist mark, and records the generated stream file, clipped information file, and playlist file in the recording medium 35. Note that in more detail, the playlist file generating unit 304 of the content file recording control unit 114 generates such a playlist file.

In step S402, the management file generating unit 401 of the content file recording control unit 114 adds a playlist information field describing the name of the playlist file recorded in the recording medium 35 in step S401 to the management file recorded in the recording medium 35. The management file generating unit 401 causes the RAM 82 to store the order of the added playlist information field in the management file.

Note that in the case of no management file being recorded in the recording medium 35, in step S402 the management file generating unit 401 generates a management file where a playlist information field describing the name of the playlist file recorded in the recording medium 35 is disposed, and the content file recording control unit 114 causes the recording medium 35 to record the generated management file. In this case, the management file generating unit 401 causes the RAM 82 to store the order of the playlist information field which is the first in the management file.

In step S403, the playlist file generating unit 304 of the content file recording control unit 114 selects the playlist file recorded in step S401.

In step S404, the playlist file generating unit 304 stores the play item determining the clip information file generated in step S401, and indicating both of the start and end of the moving image stream stored in the stream file generated in step S401, and the playlist mark determining the play item thereof in the selected playlist file in an additional mode.

That is to say, in this case, the playlist file generating unit 304 stores the play item and playlist mark at the top of the selected playlist file.

In step S405, the playlist file generating unit 304 causes the RAM 82 to store the order of the added playlist mark in the playlist file. That is to say, the playlist file generating unit 304 causes the RAM 82 to store the first which is the order of the added playlist mark.

In step S406, the property file generating unit 301 of the property file recording control unit 111 adds the mark entry corresponding to the moving image stream stored in the stream file to the property file.

In step S407, the property file generating unit 301 adds the file entry indicating the attribute of the playlist file selected in step S403 to the property file.

In step S408, the property file generating unit 301 stores the file entry number of the file entry added in step S407 in the reference list of the mark entry added in step S406.

In step S409, the property file generating unit 301 adds the mark entry number of the mark entry added in step S406 to the referred list of the file entry added in step S407 in order of the playlist marks added to the playlist file which is stored in the RAM 82.

In step S410, the property file generating unit 301 searches the directory entry regarding the management file to which the playlist information field was added in step S402 from the property file.

In step S411, the property file generating unit 301 adds the file entry number of the file entry added in step S407 to the child list of the directory entry searched in step S410 in order of the playlist information fields added to the management file which is stored in the RAM 82.

Note that a management file being generated and recorded in the recording medium 35 in step S402, in step S410 the property file generating unit 301 generates a directory entry regarding the management file thereof, and adds this to the property file. Subsequently, in step S411, the property file generating unit 301 adds the file entry number of the file entry added in step S407 to the child list of the added directory entry in order of the playlist information fields added to the management file which is stored in the RAM 82, i.e., at the first.

In step S412, the property file generating unit 301 stores to the parent list of the file entry added in step S407 the folder entry number of the folder entry wherein the file entry number was added to the child list thereof, and the processing ends.

Thus, there is generated a property file including a mark entry having the attribute information of a moving image content for each playlist mark, and a file entry having the folder entry number of a folder entry determining the playlist information field describing the name of the playlist file. The folder entry number of a folder entry determining the playlist information field describing the name of the playlist file is an example of the reference information indirectly referencing the playlist file which is an example of the management file.

That is to say, in this case as well, it can be said that there is generated a content management file including first entry information having the attribute information a moving image content for each playing management information, and second entry information having the reference information as to the management file, and with the content management file, a first identifier for identifying the second entry information is recorded in the first entry information, and a second identifier for identifying the first entry information is recorded in the second entry information in accordance with the recording order of the playing management information recorded in the management file.

Note that in the case of no playlist file being generated, the same processing as the processing described with reference to Fig. 28 is executed as moving image recording processing. In this case, the processing in step S301 through step S305, and step S307 is the same processing as the above-mentioned processing, but in step S306, the property file generating unit 301 searches the file entry indicating the playlist file, i.e., the file entry indicated with the file entry number stored in the child list of the property file from the property file in the same order as the order in the management file of the playlist information field describing the name of the playlist file, and in step S308 the property file generating unit 301 adds the mark entry number of the added mark entry to the referred list of the searched file entry thereof in order of the playlist marks added to the playlist file, which is stored in the RAM 82.

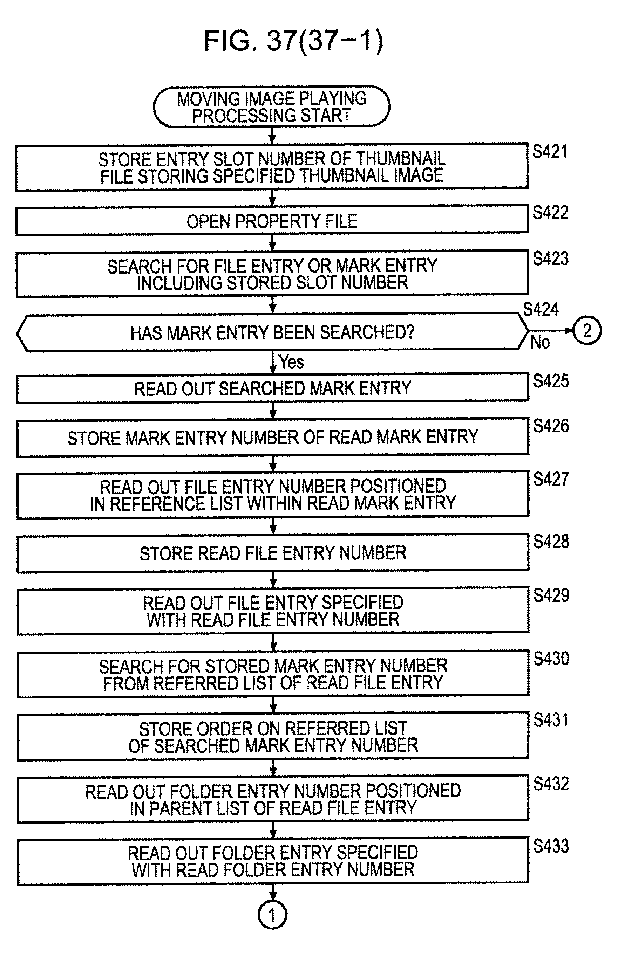

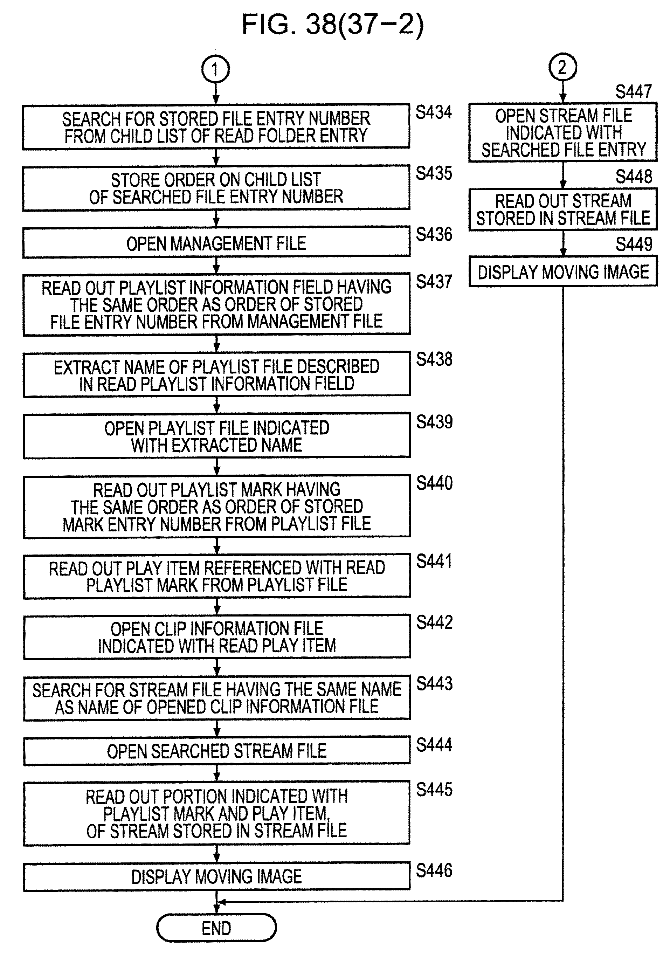

Fig. 37 and Fig. 38 are flowcharts describing another example of the moving image playing processing. Each of step S421 through step S427 is the same as each of step S321 through step S327 in Fig. 30, so description thereof will be omitted.

In step S428, the entry reading unit 321 stores the file entry number read out from a reference list. For example, in step S428, the entry reading unit 321 stores the file entry number which is the fourth in the RAM 82.

Each of step S429 through step S431 is the same as each of step S328 through step S330 in Fig. 30, so description thereof will be omitted.

In step S432, the entry reading unit 321 reads out the folder entry number disposed on the parent list of the file entry read in step S429. For example, in step S432, the entry reading unit 321 reads out the folder number which is the sixth disposed on the parent list of the fourth file entry.

In step S433, the entry reading unit 321 reads out the folder entry determined with the folder entry number read out in step S432, from the property file. For example, in step S433, the entry reading unit 321 reads out the folder entry determined with the folder entry number which is the sixth, from the property file.

In step S434, the entry reading unit 321 searches the stored file entry number from the child list of the folder entry read out in step 5433. For example, in step S434, the entry reading unit 321 searches the stored file entry number which is the fourth from the child list of the folder entry which is the sixth.

In step S435, the entry reading unit 321 causes the RAM 82 to store the order on the child list of the searched file entry number. For example, as shown in Fig. 35, in the case of the file entry number which is the fourth stored in step S428 being stored as the second file entry number of the file entry numbers of the child list, the entry reading unit 321 causes the RAM 82 to store the order on the child list of the searched file entry number which is the second.

In step S436, the content file playing control unit 145 opens the management file disposed in the directory of MOVIE1 along with the playlist file, clip information file, and stream file.

In step S437, the playlist information field reading unit 402 of the content file playing control unit 145 reads out the playlist information field having the same order as the order of the file entry number stored in the RAM 82 from the management file. For example, in the case of the order of the stored file entry number being the second, in step S437 the playlist information field reading unit 402 reads out, of the playlist information fields disposed in the management file, the second playlist information field from the management file.

In step S438, the playlist information field reading unit 402 extracts the name of the playlist file described in the read playlist information field. In step S439, the content file playing control unit 145 opens the playlist indicated with the extracted name, which is disposed in the directory of MOVIE1.

Step S440 through step S449 are the same as step S332 through step S341 in Fig. 30 or Fig. 31, so description thereof will be omitted.

Thus, the attribute information of each moving image content recorded as a mark can be readily read out, a moving image content can be selected based on the attribute information of each moving image content recorded as a mark, and the selected moving image content can be readily played.

Thus, in the case of an arrangement being made wherein a playlist is stored in a playlist file, image management information is stored in a clip information file, and a stream is stored in a stream file, each moving image content can be recorded as multiple files each of which the data to be stored differs. Also, in the case of an arrangement being made wherein of a singular or multiple moving image contents, a management file recording playing management information indicating a playing range serving as one recording unit for each moving image content, a content management file is generated, which includes first entry information having the attribute information of a moving image content for each piece of playing management information, and second entry information having the reference information as to the management file, a first identifier for identifying the first entry information is recorded in the second entry information in accordance with the recording order of the playing management information recorded in the management file, and a second identifier for identifying the second entry information is recorded in the first entry information, so as to play a moving image content having a desired attribute rapidly, the moving image content can be recorded.

In the case of an arrangement being made wherein a playlist stored in the playlist file is read out, image management information stored in the clip information file is read out, and a stream stored in the stream file is read out, each moving image content recorded as multiple files each of which the data to be stored differs can be played. Also, in the case of an arrangement being made wherein from a content management file including first entry information having the attribute information of a moving image content for each piece of playing management information indicating a playing range serving as one recording unit, of a singular or multiple moving image contents, which is the first entry information identified with a first identifier, which records a second identifier for identifying second entry information having the reference information as to the management file recording playing management information for each moving image content, and second entry information recording a first identifier for identifying the first entry information in accordance with the recording order of playing management information recorded in the management file, the first entry information and second entry information are read out, and playing management information is read out from the management file in accordance with the recording order of the second identifier in the second entry information, a moving image content having a desired attribute can be played more rapidly.

Note that an arrangement may be made wherein the recording medium 35 records a content file and content management file, and before processing for reading out the content management file, the content management file is copied to and stored in the RAM 82 or flash ROM 83, the content file is read out from the recording medium 35, and the content management file is read out from the RAM 82 or flash ROM 83.

Also, description has been made wherein the recording medium 35 is configured so as to be detachable, but the recording medium 35 may be configured integral with the digital camera 11 so as not to be detachable. In this case, an arrangement may be made wherein the content file is recorded in the recording medium 35, and the content management file is recorded in the flash ROM 83.

Further, an arrangement may be made wherein the content file is recorded in the recording medium 35 which is configured detachably, and the content management file is recorded in the flash ROM 83. In this case, when a content is recorded, an ID for determining the recording medium 35 or content file is stored in the content management file, or an ID for determining the content management file in stored in the recording medium 35 or content file, or further an ID for determining the recording medium 35 or content file is stored in the content management file, and also an ID for determining the content management file is stored in the recording medium 35 or content file. In the case of the content management file or content file being read out, the content file storing a content, and the content management file storing information relating to the content thereof are determined with this ID.

Note that an arrangement may be made wherein the recording medium 35 is mounted on stationary equipment such as a DVD player, a television receiver, or the like, and such equipment executes metadata searching processing, display processing, stream playing processing, and stream playing or still image display processing.

Also, a still image content may be stored in an EXIF file. In this case, metadata is further recorded in the IFD region of APP1. With equipment for playing a content for playing a content, the metadata of either a content management file or EXIF file can be employed.

Note that a content is not restricted to a moving image or still image, may be something to be useful for a user, such as audio, data, and so forth.

Also, the present invention is not restricted to digital cameras, and can be applied to equipment for recording a content or playing a content, such as personal computers, cellular phones, portable recorders, portable players, and so forth.

The above-mentioned series of processing can be executed with hardware, and also can be executed with software. In the case of the series of processing being executed with software, a program making up the software thereof is installed from a program recording medium into a computer embedded in dedicated hardware, or for example, a general-purpose personal computer capable of executing various types of functions by installing various types of programs therein.

A program recording medium for storing a program which is installed into a computer, and is set to an executable state by the computer is, as shown in Fig. 1, configured of the recording medium 35 which is a package medium made up of a magnetic disk (including a flexible disk), optical disc (including CD-ROM (Compact Disc-Read Only Memory), DVD (Digital Versatile Disc)), or semiconductor memory, or flash ROM 83 in which the program is temporarily or eternally stored, or an unshown hard disk, or the like. Storing of the program in a program recording medium is carried out using a cable or wireless communication medium, such as a local area network, the Internet, digital satellite broadcasting, or the like via the communication I/F 41 which is an interface such as a router, modem, or the like if needed.

Note that with the present Specification, steps describing the program to be stored in a program recording medium include processing, which is not necessarily performed in time-sequence but performed in parallel or individually, as well as processing which is performed in time-sequence following the described order.

Note that embodiments of the present invention are not restricted to the above-mentioned embodiments, and can be modified variously without departing from the essence of the present invention.

## Claims

1. A recording device comprising:
management file generating means configured to generate a management file in which of a singular or plurality of moving image contents, playing management information indicating a playing range serving as one recording unit is recorded for each of said moving image contents; and
content management file generating means configured to generate a content management file including
first entry information having the attribution information of said moving image contents for each piece of said playing management information, and
second entry information having reference information to said management file;
wherein said content management file generating means record a first identifier for identifying said first entry information in said second entry information in accordance with the recording order of said playing management information recorded in said management file, and records a second identifier for identifying said second entry information in said first entry information.

2. The recording device according to Claim 1, further comprising:
information file generating means configured to generate an information file recording file information having the name of said management file for each said management file;
wherein said content management file generating means generate third entry information recording said second identifier for identifying said second entry information in accordance with the recording order of said file information recorded in said information file, and record a third identifier for identifying said third entry information in said second entry information as said reference information.

3. The recording device according to Claim 1, wherein said first entry information and said second entry information are configured of a singular or plurality of fixed-length slots;
and wherein said first identifier and said second identifier indicate the slot number of the top slot, of said singular or plurality of fixed-length slots;
and wherein said slot number indicates the slot recording order of said content management file.

4. The recording device according to Claim 1, further comprising:
representative image file generating means configured to generate a representative image file having image entry information including the representative image information of said moving image contents for each piece of said playing management information;
wherein said content management file generating means generate said content management file having said first entry information having said attribute information which is a fourth identifier for identifying said image entry information.

5. The recording device according to Claim 1, further comprising:
metadata file generating means configured to generate a metadata file having metadata entry information including metadata accompanied with said moving image contents for each piece of said playing management information;
wherein said content management file generating means generate said content management file having said first entry information having said attribute information which is a fifth identifier for identifying said metadata entry information.

6. The recording device according to Claim 5, wherein said metadata entry information is configured of a singular or plurality of fixed-length slots;
and wherein said fifth identifier indicates the slot number of the top slot, of said singular or plurality of fixed-length slots;
and wherein said slot number indicates the slot recording order of said metadata file.

7. A recording method comprising the steps of:
generating a management file in which of a singular or plurality of moving image contents, playing management information indicating a playing range serving as one recording unit is recorded for each of said moving image contents; and
generating a content management file including
first entry information having the attribution information of said moving image contents for each piece of said playing management information, and
second entry information having reference information to said management file;
wherein a first identifier for identifying said first entry information is recorded in said second entry information in accordance with the recording order of said playing management information recorded in said management file;
and wherein a second identifier for identifying said second entry information is recorded in said first entry information.

8. A program comprising the steps of:
generating a management file in which of a singular or plurality of moving image contents, playing management information indicating a playing range serving as one recording unit is recorded for each of said moving image contents; and
generating a content management file including
first entry information having the attribution information of said moving image contents for each piece of said playing management information, and
second entry information having reference information to said management file;
causing a computer to execute processing wherein a first identifier for identifying said first entry information is recorded in said second entry information in accordance with the recording order of said playing management information recorded in said management file, and a second identifier for identifying said second entry information is recorded in said first entry information.

9. An imaging apparatus configured to generate playing management information along with an image-captured moving image content, comprising:
management file generating means configured to generate a management file in which of a singular or plurality of moving image contents, playing management information indicating a playing range serving as one recording unit is recorded for each of said moving image contents; and
content management file generating means configured to generate a content management file including
first entry information having the attribution information of said moving image contents for each piece of said playing management information, and
second entry information having reference information to said management file;
wherein said content management file generating means record a first identifier for identifying said first entry information in said second entry information in accordance with the recording order of said playing management information recorded in said management file, and records a second identifier for identifying said second entry information in said first entry information.

10. A playing device, with a content management file including
first entry information having, of a singular or plurality of moving image contents, the attribute information of said moving image contents for each piece of playing management information indicating a playing range serving as one recording unit, which is identified with a first identifier, recording a second identifier for identifying second entry information having the reference information to a management file recording said playing management information for each of said moving image contents, and
second entry information recording said first identifier for identifying said first entry information in accordance with the recording order of said playing management information recorded in said management file, comprising:
first reading means configured to read out said first entry information and said second entry information from said content management file; and
second reading means configured to read out said playing management information from said management file in accordance with the recording order of said second identifier of said second entry information.

11. The playing device according to Claim 10, wherein said first reading means, with said content management file further including third entry information in which said second identifier is recorded in accordance with the recording order of file information including the name of said management file which is recorded in an information file for each said management file, further read out said third entry information from said content management file including said second entry information recording a third identifier for identifying said third entry information as said reference information; further comprising:
third reading means configured to read out said file information recorded in said information file in the same recording order as the recording order of said third identifier of said third entry information.

12. The playing device according to Claim 10, wherein said first entry information and said second entry information are configured of a singular or plurality of fixed-length slots;
and wherein said first identifier or said second entry identifier indicates the slot number of the top slot of said singular or plurality of fixed-length slots;
and wherein said slot number indicates the slot recording order of said content management file.

13. The playing device according to Claim 10, further comprising:
third reading means configured to read out from a representative image file having image entry information including the representative image information of said moving image contents said image entry information for each piece of said playing management information;
wherein said first reading means read out said first entry information from said content management file having said first entry information including said attribute information which is a fourth identifier for identifying said image entry information.

14. The playing device according to Claim 10, further comprising:
third reading means configured to read out from a metadata file having metadata entry information including metadata accompanied with said moving image content said metadata entry information for each piece of said playing management information;
wherein said first reading means read out said first entry information from said content management file having said first entry information including said attribute information which is a fifth identifier for identifying said metadata entry information.

15. The playing device according to Claim 14, wherein said metadata entry information is configured of a singular or plurality of fixed-length slots;
and wherein said fifth identifier indicates the slot number of the top slot of said singular or plurality of fixed-length slots;
and wherein said slot number indicates the slot recording order of said metadata file.

16. A playing method, with a content management file including
first entry information having, of a singular or plurality of moving image contents, the attribute information of said moving image contents for each piece of playing management information indicating a playing range serving as one recording unit, which is identified with a first identifier, recording a second identifier for identifying second entry information having the reference information to a management file recording said playing management information for each of said moving image contents, and
second entry information recording said first identifier for identifying said first entry information in accordance with the recording order of said playing management information recorded in said management file,
comprising the steps of:
reading out said first entry information and said second entry information from said content management file; and
reading out said playing management information from said management file in accordance with the recording order of said second identifier of said second entry information.

17. A program for causing, with a content management file including
first entry information having, of a singular or plurality of moving image contents, the attribute information of said moving image contents for each piece of playing management information indicating a playing range serving as one recording unit, which is identified with a first identifier, recording a second identifier for identifying second entry information having the reference information to a management file recording said playing management information for each of said moving image contents, and
second entry information recording said first identifier for identifying said first entry information in accordance with the recording order of said playing management information recorded in said management file, a computer to execute the steps of:
reading out said first entry information and said second entry information from said content management file; and
reading out said playing management information from said management file in accordance with the recording order of said second identifier of said second entry information.
